# EUROPÄISCHE PATENTSCHRIFT

(11) **EP 0 586 642 B1**
(45) Veröffentlichungstag und Bekanntmachung des Hinweises auf die Patenterteilung: **19.06.1996**
(21) Anmeldenummer: 93905142.1
(22) Anmeldetag: 23.03.1993
(51) Int. Cl.: B32B 31/00

(54) **VERFAHREN UND VORRICHTUNG SOWIE ANLAGE ZUR HERSTELLUNG VON LAMINATEN**
PROCESS, DEVICE AND INSTALLATION FOR PRODUCING LAMINATES
PROCEDE, DISPOSITIF ET INSTALLATION POUR LA FABRICATION DE STRATIFIES

(30) Priorität: 24.03.1992 CH 924/92; 05.02.1993 CH 353/93
(43) Veröffentlichungstag der Anmeldung: 16.03.1994
(60) Teilanmeldung: 95117036.4
(73) Patentinhaber: ULRICH STEINEMANN AG, CH-9015 St. Gallen (CH)
(72) Erfinder: ACHILLES, Gerhard, D-6730 Neustadt (DE); STURZENEGGER, Ernst, CH-9202 Gossau (CH); PERBERSCHLAGER, Alois, CH-8008 Zürich (CH); ZUMSTEIN, Bruno, CH-9015 St. Gallen (CH); MESSMER, Emil, CH-9016 St. Gallen (CH)
(74) Vertreter: Ackermann, Ernst
(86) Internationale Anmeldenummer: CH9300081
(87) Internationale Veröffentlichungsnummer: WO9318917

(56) Entgegenhaltungen:
- EP-A- 0 084 880
- EP-A- 0 165 824
- EP-A- 0 235 790
- EP-A- 0 361 259
- DE-A- 502 976
- DE-A- 3 515 784
- DE-C- 119 369
- DE-C- 455 609
- FR-A- 2 409 139
- FR-A- 2 567 806
- FR-A- 2 615 448
- GB-A- 1 125 539
- US-A- 3 820 427
- US-A- 3 901 112
- US-A- 4 158 712
- US-A- 4 279 183
- US-A- 4 938 907
- MACHINE DESIGN Bd. 57, Nr. 19, August 1985, CLEVELAND, OHIO, USA Seiten 66 - 71 C WALL 'THE MOVE TO ELECTRONIC DRIVE SHAFTS'

## Beschreibung

### Technisches Gebiet

Die Erfindung betrifft ein Verfahren zur Herstellung von UV-Laminaten, wobei auf einer dünnen Folie UV-polymerisierbarer Kleber verteilt aufgetragen und die Folie mit Einzel- oder Endlosbogen durch ein Kaschierwerk zu einem Laminat vereinigt und mit UV-Strahlen fixiert wird, sowie eine Vorrichtung zur Herstellung von UV-Laminaten, bestehend aus einer dünnen Folie sowie Einzel- oder Endlosbogen, welche ein Kaschierwerk mit Folienwalze und Bogenwalze, eine UV-Härtung,ferner eine Bogen- und Folienzuführung aufweist. Derartige Laminate werden insbesondere in den Werbemedien oder in der Verpackungsindustrie eingesetzt.

### Stand der Technik

Die relativ dünne Folie aus Kunststoffmaterial wird von einer Rolle endlos abgenommen. Im Falle von Einzelbogen werden die Bogen von einem Stapel entnommen. Beide zusammen werden als Laminat dem Kaschierwerk zugeführt. Um eine Verschmutzung der Walzen im Kaschierwerk zu verhindern, überlappt man häufig die einzelnen aufeinanderfolgenden Bogen im Randbereich. Sie werden über- oder unterschuppt mit der Folie überzogen. Aber auch ein Kaschieren der einzelnen Bogen Stoss an Stoss ist denkbar. Nach dem Kaschieren sind die Einzelbogen durch die Folie miteinander verbunden. Vor der Weiterverarbeitung in einem nachgeschalteten Arbeitsprozess muss das Laminat wiederum zu einzelnen Laminatbogen vereinzelt werden.

Die DE-PS Nr. 2 817 917 zeigt eine bekannte Lösung für die Anwendung von strahlen-härtbaren sogenannten UV-Klebern. Diese Lösung brachte einen grossen Fortschritt gegenüber den konventionellen Lösungen bei denen teils mit IR-Strahlen und Warmluft über relativ lange Zeit der Kleber angetrocknet werden musste. Die Austrocknung des Laminates beträgt teils bis zu 24 Stunden bevor eine Weiterverarbeitung möglich wird. Die Verarbeitungsgeschwindigkeit der bekannten Anlagen bei konventionellen Klebern muss unterhalb von zum Beispiel 40 Metern pro Minute liegen, da sonst eine erhebliche Zunahme von Betriebsstörungen auftraten. 60 Meter pro Minute wurde bisher gleichsam als "Verarbeitungs-Schallgrenze" angenommen.

Bei der Anwendung von UV-polymerisierbaren beziehungsweise härtbaren Klebern muss nicht im eigentlichen Sinne der Kleber getrocknet sondern viel mehr gehärtet werden, was nur eine Zeitspanne von Bruchteilen einer Sekunde in Anspruch nimmt. Unmittelbar nach der Härtung können die UV-kaschierten Bogen ohne Qualitätsverlust zum Beispiel auf einen Stapel aufgeschichtet oder auf Rollen gelagert werden. Dies ist für eine kontinuierliche Verfahrensweise eine Voraussetzung. An die Kaschierung, die an sich eine Veredelung des Trägermateriales darstellt, werden je nach der Endbestimmung ganz verschiedene Anforderungen gestellt.

Bei einer ersten Kategorie dient die Kaschierung vor allem der Erhöhung der mechanischen Festigkeit sowie zum Schutz der Oberfläche des bedruckten Trägermateriales, welches hier aus bedrucktem Papier oder Karton bestehen kann. Daraus werden zum Beispiel Buchhüllen, Imagemappen, Plakate usw. hergestellt.

Bei einer zweiten Kategorie wird die Kaschierung insbesondere zur Verbesserung beziehungsweise Effektsteigerung der Wirkung von Farben oder eines Druckes gefordert. Das Endprodukt ist ein beschichtetes Material, das durch eine transparente Folie veredelt wurde, zum Beispiel für Prospekte oder anderen Werbeträgern und hochwertigen Kunstdrucken. Es kommt dabei eine glasartige Wirkung zu stande. Besonders bei höchsten Ansprüchen wie bei Kunst- und anspruchsvollsten Werbedrucken muss jeder störende Nebeneffekt, wie feinste Luftblasen zwischen Folie und Trägermaterial, ungenügend verbundene Stellen oder schlierenartige Effekte in der aufgebrachten Schicht vermieden werden. Die Aussage des Druckes soll verstärkt aber niemals durch Nebenerscheinungen bei der Kaschierung gestört werden. Viel mehr sollen vor dem Kaschieren noch vorhandene Mängel zum Beispiel wie Oberflächenrauhigkeiten verdeckt oder kaschiert werden. Damit werden besonders auch für den visuellen Eindruck, höchste Anforderungen gestellt. Bekannt ist, dass das menschliche Auge in dieser Beziehung ein kaum zu überbietendes Erkennungsvermögen hat, so dass die Anforderungen hier beinahe an Perfektion grenzen.

Die jüngste Vergangenheit hat gezeigt, dass eine Lösung gemäss DE-PS Nr. 2 817 917 auf optimale Weise eine "Schutz-Kaschierung" erlaubt und sehr erfolgreich ist. Dagegen war es nicht möglich, sinngemäss eine "Kunst-Kaschierung" mit der dafür gesetzten Erwartung kommerziell anzuwenden, da feinste Störeffekte einfach nicht mit genügender Betriebssicherheit vermieden werden konnten. Selbst sehr grossangelegte und langdauernde Untersuchungen insbesondere auch für die Wahl spezifischer Klebemittel, Foliematerialien usw. brachten den gewünschten Durchbruch nicht. Von der Natur des strahlen-härtbaren Klebers aus gesehen, ist die Kleberbefestigung nun nicht mehr der Hauptfaktor der die Verarbeitungsgeschwindigkeit begrenzt.

Die US-PS Nr. 4 158 712 zeigt ein Beispiel einer Plattenbeschichtung. Dabei wird zumindest eine teilweise Imprägnierung der Folie sowie die Verwendung von Harz-Stoffen vorgeschlagen. Da eine gewisse Tiefenwirkung mit der Imprägnierung erreicht werden soll, würde diese Lösung die Methode des einfachen UV-Kleberauftrages komplizieren. Die EPA Nr. 235 790 zeigt eine Lösung für das Laminieren von Papier. Hier wird versucht eine wählbare Spannung der Papierbahn insbesondere im Bereich der Laminierzone unter Kontrolle zu halten. Für Einzelbogen ist diese Methode ungeeignet. Alle Versuche mit UV-Klebern scheiterten bei Auftreten von Zugspannungen. Weder die US-PS Nr. 4 158 712 noch die EPA Nr. 235 790 regen die Verwendung von UV-polymerisierbaren Klebern an.

### Darstellung der Erfindung

Der Erfindung wurde deshalb die Aufgabe gestellt, Verfahren und Vorrichtung zu verbessern, insbesondere in Bezug auf die Betriebssicherheit und für die Qualität des Endproduktes auch bei höchsten Verarbeitungsgeschwindigkeiten, so dass strahlen-härtbare Laminate auch für höchste Ansprüche im Sinne von "Kunstkaschierung" herstellbar sind.

Eine weitere Teilaufgabe lag darin, auch in den Teilbereichen Verfahren und Vorrichtung zu verbessern, dass zum Beispiel auch auf der selben Fabrikationslinie alle entsprechenden Kaschierarbeiten ökonomisch durchführbar sind, mit dem Ziel einer möglichst fehlerfreien Aufbringung der Folie auf die Bogen beziehungsweise der fehlerfreien Laminatherstellung für Einzelbögen und Endlosbogen ganz besonders auch bei hoher Verarbeitungsgeschwindigkeit. Ferner sollte die Herstellung einer frei wählbaren Bogenfolge für die höchsten Geschwindigkeiten ohne Schäden an dem Bogen zum Beispiel durch die Ausrichtstation möglich sein.

Das erfindungsgemässe Verfahren ist dadurch gekennzeichnet, dass Folie und Bogen auf eine gleiche Geschwindigkeit zum Kaschierwerk gebracht werden und die mit UV-Kleber beschichtete Folie schubkraftfrei, schwimmend, mit geringer Presskraft und möglichst spannungsfrei auf den Bogen aufgewalzt wird.

In der Fachwelt hatten sich in den letzten Jahren bereits Stimmen breit gemacht, die das UV-Laminieren für höchste Anforderungen trotz der enormen produktionstechnischen Vorteile als ungenügend verwarfen, da alle entsprechenden Erfahrungen darauf hinzuweisen schienen. Völlig überraschend für die Erfinder war letzten Endes das Resultat, welches auf Grund der Erkenntnis gewonnen werden konnte, dass für höchste Verarbeitungsgeschwindigkeiten besonders in Bezug auf die physikalischen Gesetze, gerade die UV-Kaschierungen bis dahin unzweckmässig angegangen wurden. Der erste grundsätzliche Fehlansatz lag darin, dass man die UV-Kaschierung in Analogie zu den verbreiteten Klebpapieren zu handhaben versuchte. Die Erfahrung besagt bei der klassischen Klebung, dass nach der Benetzung der Klebeschicht und Aufbringen des Klebschichtträgers auf einen anderen Gegenstand, zum Beispiel beim Zukleben eines Briefumschlages, die Klebeverbindung sofort wirkt, im Sinne eines "Sekundenleims", und bei einer Trennung der Klebeschicht, schon kurz danach, die Gefahr der Oberflächenbeschädigung besteht. Es wurde ganz offensichtlich übersehen, dass UV-Kleber diesbezüglich ein völlig anderes Verhalten haben. Die UV-Klebung entsteht nämlich nicht dadurch, dass das Netzmittel des Klebers sofort in den Trägerstoff eindringt und durch die damit bedingte Trocknung eine Klebewirkung erzeugt, sondern dadurch, dass man die Wirkung der UV-Strahlen zur Härtung des Klebestoffes ausnutzt. Die strahlen-härtbaren Kleber sind gerade nicht Leimstoffe im klassischen Sinne (welche sofort die Gedankenassoziation mit Klebrigkeit hervorrufen) sondern haben vor der Härtung eine eigenartige eher ölige Wirkung, vergleichbar etwa mit Schmieröl. Legt man eine dünne Glasscheibe auf eine ebene Fläche, mit einer feinen Schmierölschicht dazwischen, so kann nämlich das Glas fast ohne Krafteinwirkung parallel zur Fläche verschoben werden.

Diese Erkenntnis machte es möglich, an einen Kernpunkt der Erfindung zu kommen, respektive den Grund vieler Fehlschläge in der Vergangenheit zu begreifen. Der Hauptfehler lag darin, dass die UV-Kaschierung mit der bisher üblichen Praxis der Kalandrierung durchgeführt wurde. Gerade bei der "Hochglanzkaschierung" hat die Folie vorwiegend eine optische Funktion und soll deshalb so glatt wie möglich sein. Ein Kalanderwalzenpaar ist dafür bekannt, dass es das Gut von den Kalander-Drücken ausgehenden Haft- und Reibkräfte mit grossen Kräften einzieht. Bei der konventionellen Kaschierung wird der Einzugs-Effekt beziehungsweise die entsprechenden grossen Einzugskräfte benötigt, damit einmal der zähe, "klebrige" Kleber auf die rauhe Oberfläche des Bogens gewalzt wird besonders aber auch um das Laminat von der Rohfolienrolle abzuziehen und durch die Beleimung zu ziehen. Im Gegensatz dazu soll gemäss der neuen Erfindung die Folie mit dem aufgetragenen strahlen-härtbaren Kleber auf den Bogen - wie zuvor das Glas auf der Fläche mit Schmieröl dazwischen - "schwimmend" aufgebracht werden. Im Falle der Kalandrierung eines UV-Laminates wirkten zwangsnotwendig zu hohe Verschiebekräfte zwischen Folie und Bogen. Es traten deshalb u.a. Verschiebungen, Verspannungen, Schlieren und ungleich verbundene Partien auf. Dies war der Grund von fast allen "Schönheitsfehlern" bei der bisherigen Kaschierung mit strahlen-härtbaren Klebern. Wurde dagegen die Bedingung der Schubkraftfreiheit sowie die geringst mögliche Zugkraft auf das Laminat erfüllt, konnten zur Überraschung aller Beteiligten fehlerfreie Produkte mit bisher nicht erreichter Qualität hergestellt werden.

Die Erfindung erlaubt ferner eine ganze Anzahl weiterer ganz besonders vorteilhafter Weiterausgestaltungen. Bevorzugt wird die Folie mit geringer Presskraft zwischen den Walzen, vorzugsweise von weniger als 100 N/cm, besonders vorteilhafterweise von 10 - 50 N/cm aufgewalzt. Dies bedeutet, dass die effektiven Druckkräfte beim Kaschieren des Laminates zum Beispiel in einer Grössenordnung von 50 - 200 kg liegen, also nicht sehr viel mehr als früher beim Aufleimen des Bogens von Hand beziehungsweise als einfache Hand-Pressmittel eingesetzt wurden. Diese Pressdrucke liegen in der Grössenordnung von einem Faktor 10 tiefer gegenüber der klassischen Kalandrierung.

Die Walzung erfolgt vorzugsweise durch zwei angetriebene Kaschierwalzen oder eine Bänderkombination, wobei die untere Stützwalze beziehungsweise Kaschierbahn auf das Ziel einer im wesentlichen identischen Führungsgeschwindigkeit von Bogen und Folie geregelt wird. Die dünne Roh-Folie wird von einer Rolle abgezogen und der Kleber über eine Auftragwalze nass aufgetragen. Anschliessend wird die Folie glatt aber möglichst zugfrei der Kaschierwalze zugeführt und der Bogen kaschiert. Die Roh-Folienrolle wird vor den Kaschierwalzen so positioniert, dass der Abzug der Folie und die Führung bis zu dem Kleberauftragswerk über eine Anpresswalze erfolgt. Die mit Nasskleber beschichtete Folie wird danach über eine Zugausgleichsrolle in das Kaschierwalzenpaar geführt. Dabei wird die Zugausgleichsrolle bevorzugt als Messrolle ausgebildet, welche eine wichtige Funktion für die Minimierung der Zugkräfte auf die Folie zwischen Auftragswerk und Kaschierwalzenpaar hat.

Nach einer weiteren besonders vorteilhaften Ausgestaltung wird für die Wiederherstellung von Einzel-Bögen die Folie unmittelbar nach der Kaschierwalzung in nassem Zustand geschnitten. Sehr gute Resultate konnten dadurch erzielt werden, dass die Folie durch ein bewegtes thermisches Schneidmesser, das sich über die ganze Breite des Laminates erstreckt, geschnitten wird.

Für besondere Anwendungen ist es möglich, dass die mit Nasskleber beschichtete Folie gegebenenfalls vor dem Kaschieren einer Kleberstabilisierung oder Aktivierung unterworfen und nach dem Kaschieren einer Härtung unterworfen wird. Dazu wird auf die DE-PS Nr. 3 665 726 bzw. die entsprechende EP-PS Nr. 233 893 verwiesen.

Zweckmässigerweise werden die unverarbeiteten Bogen auf der einen Endseite einer Anlage gelagert, im wesentlichen horizontal über die Verfahrensstrasse zu der anderen Endseite der Anlage geführt und die Folienbeleimung und Zuführung oberhalb der Verfahrensstrasse angeordnet. Die Zuführung der Folie erfolgt von oben nach unten auf die Bogen derart, dass Folie und Bogen zugfrei und mit der Umlaufgeschwindigkeit der beiden Kaschierwalzen zugeführt werden.

Eine entsprechende Anlage weist ein Kaschierwerk mit Folienwalze und Bogenwalze, ferner eine Bogen- und Folienzuführung auf, wobei sowohl die Folienwalze wie die Bogenwalze steuer- und oder regelbare Antriebsmittel aufweisen, welche für eine im wesentlichen identische Führungsgeschwindigkeit für Folie und Bogen und die Folienzuführung als Folienzugkraft regelbares Folienführwerk ausgebildet ist. Besonders bevorzugt wird die Folienwalze als Regelleitwalze ausgebildet, von welcher aus die Hauptfunktionen der ganzen Anlage koordiniert werden. Ganz besonders bevorzugt wird dafür von einem Inkrementalgeber der Folienwalze beziehungsweise des Antriebssystems der Folienwalze ausgegangen, der einen Basissteuerparamter für alle Zuführdienste abgibt.

Bei einer weiteren Ausgestaltung wird die Folie über eine vorzugsweise wegfreie Zug-Messwalze geführt, mit minimaler Kraft straff geführt, durch entsprechende Regelung der Auftragwalzendrehzahl auf die Verarbeitungsgeschwindigkeit gebracht wird.

Eine weitere Ausgestaltung für die Herstellung einer Bogenfolge von Einzelbogen auf einem Bogenzuführband für einen Verarbeitungsprozess zum Beispiel für eine Kaschier- oder Lackieranlage oder für Druckmaschinen, ist dadurch gekennzeichnet, dass das effektive Verarbeitungstempo festgestellt über Rechnermittel die Sequenz der Anlegerleistung ermittelt und die Bogenfolge über gesteuerte mechanische Mittel erzeugt wird.

Bevorzugt weisen die mechanischen Mittel Bogentransportmittel auf, die in Funktion des Verarbeitungstempo und Bogenfassmittel die in Funktion der Anlegerleistung gesteuert werden. Dabei werden die Bogentransportmittel in Abhängigkeit von dem Bogenzuführband und die Bogenfassmittel von dem Anleger her angetrieben. Alle Druck-, Kratz- oder Reibschäden an der Bogenoberfläche können vermieden werden, wenn die Bogen von einer Zuführgeschwindigkeit (VA) über die mechanischen Mittel sanft auf das Verarbeitungstempo beschleunigt werden.

Eine weitere Ausgestaltung zur Herstellung einer präzisen Bogenfolge, zum Beispiel einer Über- oder Unterschuppung oder einer mit Abstand oder Stoss an Stoss-Folge und Weitertransport derselben mit wählbarem Verarbeitungstempo ist dadurch gekennzeichnet, dass die vorzugsweise mit grosser Schuppung kontinuierlich zugeführten Bogen über einer Beschleunigungswalze mit Führungsrollen mit weniger als 4 g vorzugsweise weniger als 2 g beschleunigt werden.

Besonders bevorzugt werden die Bogen über eine Wegstrecke von weniger als einer halben Bogenlänge auf die Verarbeitungsgeschwindigkeit sanft beschleunigt. Der jeweils nachfolgende Bogen wird durch einen Anschlag gestopt und das Walzenpaar während der Stopzeit auseinandergerückt, wobei vorzugsweise das Walzenpaar in einem in Abhängigkeit der Bogenlänge wählbaren Zeitpunkt eingerückt und die Walzen bis zum Erreichen der Kaschiergeschwindigkeit zusammen mit dem Bogen beschleunigt werden.

Es wird vorgeschlagen, die Beschleunigungsstrecke möglichst klein zu halten. Die Beschleunigungsstrecke wird für die meisten Fälle in dem Bereich von 0,1 - 10 vorzugsweise 2 - 6 mal länger als die Über- beziehungsweise Unterschuppung gewählt. In Extremfällen kann diese aber auch in einem Bereich zwischen 0,1 und 0 liegen, insbesondere bei nur ganz geringfügigen Geschwindigkeitsdifferenzen beziehungsweise bei sehr tiefen Geschwindigkeiten.

Gemäss einem weiteren vorteilhaften Ausgestaltungsgedanken des erfindungsgemässen Verfahrens zum Trennen eines Laminates bestehend aus einer bahnförmigen mit Kleber beschichteten Folie und aus durch die beschichtete Folie miteinander verbundenem Einzelbogen wird das Laminat von einem Kaschierwerk kontinuierlich an eine Schneidstation vorbeigeführt. Dabei wird die Schneidstation zwischen dem Kaschierwerk und einer anschliessenden Laminatverfestigungsstation angeordnet und die Folie, vorzugsweise mit einem thermischen Schneidmesser nass geschnitten. Das Schneidwerk wird für den Schnitt mit etwa gleicher Geschwindigkeit mit dem Laminat geführt und auf das Laminat zu und weg bewegt. Es konnten auch bei extrem hoher Schneidkadenz saubere Schnitte dadurch erreicht werden, dass das Laminat für den Folienschnitt über eine nachgibige Auflage, vorzugsweise über ein am Anfang und am Ende des Schneidbereiches aufliegende und mit gleicher Geschwindigkeit wie das Laminat mitlaufendes Endlosband, abgestützt wird. Das Endlosband kann als Saugband ausgebildet werden, so dass das Laminat über den Schneidbereich durch die Saughaftung durchgezogen wird. Das Schneidwerk wird als vorzugsweise kreisendes Messerwerk ausgebildet, wobei eine Regelung der Umlaufgeschwindigkeit über Rechnermittel erfolgt, derart, dass für jeden Schnitt das Messerwerk als ein Schneidzyklus auf die Geschwindigkeit des Laminates beschleunigt, während dem Schnitt mit dem Laminat etwa mit gleicher Geschwindigkeit mitbewegt und danach auf eine tieferen Geschwindigkeit verzögert wird. Ganz besonders zweckmässig ist es, wenn in dem Bereich der tieferen Geschwindigkeit das Messerwerk einen O-Punkt beziehungsweise Eichpunkt zur Bewegungskontrolle durchfährt als Ausgangspunkt für die Errechnung des nächsten Zyklus. Das Messerwerk weist bevorzugt nur ein thermisches Schneidmesser auf. Jeder Schneidzyklus kann einer vollen Umdrehung des Messerwerkes entsprechen. Die O-Position wird dazu im oberen Bewegungsviertel des Drehkreises gewählt.

Gemäss einem weiteren Ausgestaltungsgedanken wird der auf die Folie aufgetragene Kleber bedarfsweise vor dem Kaschieren einer Stabilisierung oder Aktivierung unterworfen und nach dem Kaschieren einer Härtung zugeführt.

In der Folge wird nun auf die vorrichtungsgemässe Ausgestaltung Bezug genommen. Eine erste Ausgestaltung der Vorrichtung zur Herstellung von Laminaten, bestehend aus einer dünnen Folie sowie Einzel- oder Endlosbogen, wobei die Verbindung des Laminates aus UV-strahlen-härtbarem Kleber besteht, weist ein Kaschierwerk mit Folienwalze und Bogenwalze, eine UV-Härtung, ferner eine Bogen- und Folienzuführung auf und ist dadurch gekennzeichnet dass der Bogen- und Folienzuführung Steuermittel zugeordnet sind zur Zuführung von Folie und Bogen mit der gleichen Geschwindigkeit wie die Kaschiergeschwindigkeit und dass sowohl die Folienwalze wie die Bogenwalze Antriebsmittel mit einer zugeordneten Regeleinrichtung aufweisen, so dass die Folie schubkraftfrei, schwimmend, mit geringer Presskraft und möglichst spannungsfrei auf den Bogen aufwalzbar ist.

Gemäss einer weiteren vorteilhaften Ausgestaltung ist die Folienwalze als Steuerleitwalze ausgebildet, von welcher aus über einen entsprechenden Inkrementalgeber die Kleberauftragung und/oder eine Schneidstation und/oder eine Bogenschuppstation steuer- oder regelbar ist.

Gemäss einer weiteren Ausgestaltung der Vorrichtung zum Trennen eines Laminates bestehend aus einer bahnförmigen mit Kleber beschichteten Folie und aus, durch die beschichtete Folie miteinander verbundenen Einzelbogen wird das Laminat von einem Kaschierwerk kontinuierlich an einer Schneidstation vorbeigeführt. Diese ist dadurch gekennzeichnet, dass die Schneidstation ein mit der Geschwindigkeit des Laminates mitbewegbares Schneidmesser sowie Rechnermittel und einen Drehzahlregel-Antrieb des Schneidwerkes aufweist, welches vorzugsweise als thermisches Schneidmesser mit kreisendem Messerwerk ausgebildet ist und ganz besonders vorzugsweise in einem oberen Verzögerungs- oder Ruhebereich einen O-Positions-Sensor aufweist.
Eine weitere vorteilhafte Ausgestaltung zum Herstellen einer Bogenfolge von Einzelbogen auf einem Bogenzuführband für einen Verarbeitungsprozess zum Beispiel für eine Kaschieranlage mit einem steuerbaren Bogenanleger ist dadurch gekennzeichnet, dass sie über Rechnermittel steuerbar ist, welche in Funktionsverbindung mit einem Ist-Wert-Aufnehmer des Verarbeitungstempo vorzugsweise einem Inkrementalgeber steht sowie eine mechanisch steuerbare Bogenfolge-Erzeugungs-Vorrichtung beziehungsweise Ausrichtstation aufweist.

Bevorzugt weist die Ausrichtstation Antriebsmittel auf, sowohl anlegerseitig wie verarbeitungsprozessseitig. Sehr zweckmässig ist es, wenn die Ausrichtstation eine Beschleunigungswalze sowie Steuermittel für den Antrieb der Beschleunigungswalze aufweist, welche vorzugsweise verarbeitungsprozessseitig antreibbar ist.

Gemäss einer weiteren Ausgestaltung werden der Beschleunigungswalze ein- und ausrückbare Führungsrollen sowie ein steuerbarer Anschlag zugeordnet, wobei die Ein- und Ausrückung und der Anschlag vorzugsweise von den Antriebsmitteln des Anlegers koordiniert steuerbar sind. Bevorzugt ist das Beschleunigungswalzenpaar über eine steuerbare Rutschkupplung antreibbar, wobei die Rutschkupplung zweifach wirkend einerseits für die sanfte Beschleunigung anderseits für eine Verzögerung beziehungsweise für die Abbremsung der Beschleunigungswalzen ausgebildet ist.

Bei einer weiteren Ausgestaltung ist die Rutschkupplung auf einer mittleren Schiebebüchse angeordnet, wobei gegengleich die Beschleunigungs- beziehungsweise Bremskupplung angeordnet ist, derart, dass die Rutschkupplung über mechanische Mittel betätigbar ist.

In der Folge wird nun die Erfindung an Hand von mehrern Ausführungsbeispielen mit weiteren Einzelheiten erläutert.

### Kurze Beschreibung der Erfindung

Es zeigen:
- die Figur 1: schematisch eine Laminieranlage;
- die Figur 2: ein Laminatbogen mit Bogenlänge L;
- die Figur 2a: sehr vereinfacht das bisherige Kräftespiel beim Kaschieren;
- die Figur 3a: eine Stoss an Stoss Bogenfolge;
- die Figur 3b: die an sich bekannte Überschuppung;
- die Figur 3c: die an sich bekannte Unterschuppung;
- die Figur 4: zeigt konkreter ein Auftrags -und Kaschierwerk;
- die Figur 5: zeigt eine Kaschieranlage;
- die Figur 6: zeigt eine gesamte Laminieranlage in zwei Teilen;
- die Figur 7: zeigt die Hauptelemente des Auftragwerkes
- die Figur 8: beziehungsweise 8a - 8d zeigen verschiedene Stadien der Bogenausrichtung;
- die Figur 9: die Steuerungsanordnung für die Bogenausrichtung;
- die Figur 10: ein Querschnitt X - X der Figur 9;
- die Figur 11: zeigt eine mechanische Beschleunigungs- und Bremskupplung in grösserem Massstab;
- die Figur 12: schematisch eine Schneidstation;
- die Figur 13: den Geschwindigkeitsverlauf des Schneidmessers über dem Weg;
- die Figur 14: schematisch die Herstellung eines Laminates und daraus Einzel-Laminatbogen.

### Wege zur Ausführung der Erfindung

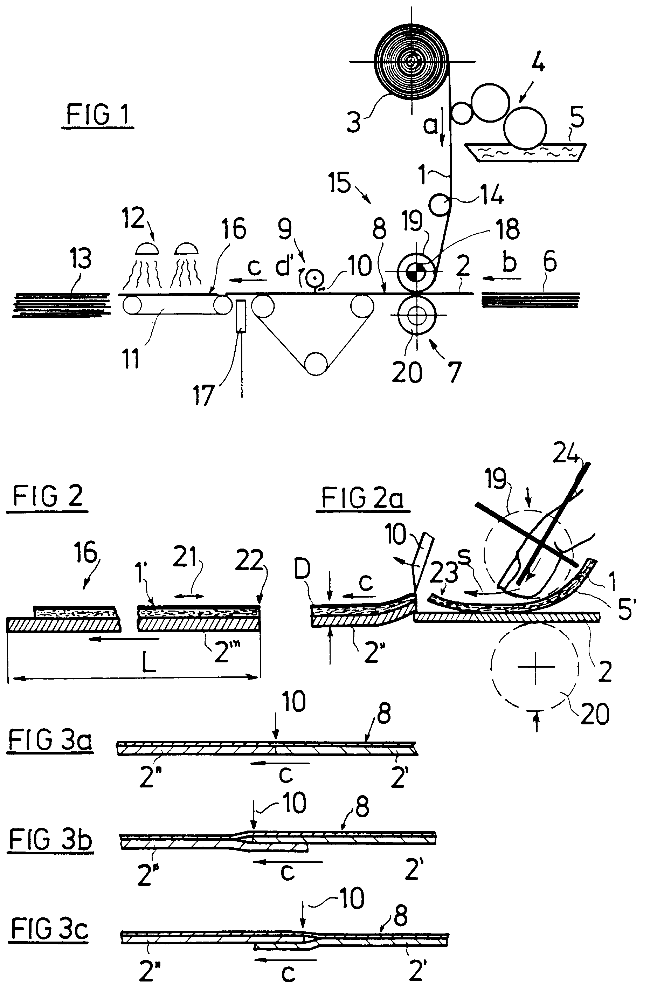

In der Folge wird nun auf die Figur 1 Bezug genommen. Die Schneidstation 9 weist auf der Folienseite ein thermisches Schneidmesser 10 auf, das an einem Messerbalken befestigt ist und sich über die gesamte Breite des Laminates erstreckt. Der Messerbalken dreht sich in Pfeilrichtung d, also gleichsinnig zur Vorschubrichtung c des Laminates 8. Das Schneidmesser 10 beschreibt dabei eine Umlaufbahn. Das Schneidmesser 10 besteht vorzugsweise aus einem elektrischen Draht oder aus einem feinen Metallstreifen, der durch elektrischen Wiederstand aufgeheizt werden kann.

Nach der Schneidstation 9 ist im Vorschubbereich des Laminates 8 eine Lichtschranke oder irgend ein anderer geeigneter Messgeber 17 angeordnet, mit dessen Hilfe die Vorderkante eines Laminatabschnittes ermittelt werden kann. Durch eine etwas erhöhte Geschwindigkeit an der Transportvorrichtung 11 ist dafür gesorgt, dass die getrennten Laminatabschnitte 16 sofort abgezogen werden und dass dadurch zwischen den einzelnen Laminatabschnitten 16 ein Zwischenraum entsteht. Der zurückgelegte Weg der Laminatabschnitte 16 wird beispielsweise über einen Inkrementalgeber 18 am Kaschierwalzenpaar 7 ermittelt. Aufgrund der ermittelten Werte aus den Gebern 17 und 18 und in Abhängigkeit der vorher in die Steuervorrichtung eingegebenen Bogenlägen wird jeweils der nächstfolgende Schneidvorgang gesteuert beziehungsweise geregelt. Die Figur 1 zeigt rein schematisch den Vorgang des Kaschierens einzelner Bogen mit einer Folie 1 in einem Kaschierwerk 15. Die Folie 1 wird als endlose Bahn von einer Rohfolienrolle 3 in Pfeilrichtung a abgezogen und dabei auf einer Seite mit einem flüssigen Kleber beschichtet. Der Kleber 5 wird über ein Auftragswerk 4 aufgetragen und verteilt.

Die mit Kleber beschichtete Folie 1 wird anschliessend den Kaschierwalzen 7 zugeführt. Die Einzelbogen 2 werden von einem Bogenstapel 6 entnommen und mit Hilfe eines Bogenanlegers in Pfeilrichtung b hintereinander ebenfalls in den Walzenspalt der Kaschierwalzen 7 eingeführt. Das in den Kaschierwalzen gebildete endlose Laminat 8 wird mit dem Schneidmessers 10 der Schneidstation 9 zu Laminatbogen getrennt wobei lediglich die Folie 1 durchgeschnitten wird. Die Laminatabschnitte 16 gelangen in Pfeilrichtung c dann auf eine Transportvorrichtung 11, auf welcher sie eine Härtestation 12 durchlaufen, in welcher der Kleber durch UV-Strahlen ausgehärtet wird. Anschliessend werden die Laminatabschnitte 16 auf einen Laminatstapel 13 gelegt. Die Kaschierwalzen 7 bestehen aus einer oberen Folienwalze oder Mutterwalze 19 sowie einer unteren Bogenwalze oder Gegendruckwalze 20.

In der Figur 2 ist ein einzelner Laminatabschnitt 16 durch Überzeichnung der Dicke D sowie einer Länge L dargestellt. Dabei kann der Bogen 2''' ein Papier- oder Kartonbogen sein. Die Folie 1' wird im Regelfall aus transparentem Kunststoff bestehen. Beide werden durch eine Kleberschicht 5' verbunden. Solange der Kleber im Falle von strahlen-härtbaren Klebern noch nicht gehärtet ist, lässt sich die Folie 1' gemäss Pfeil 21 relativ leicht gegenüber dem Bogen 2''' verschieben, was jedoch aus vielerlei Gründen nicht erwünscht ist. Zum Beispiel ist es für die weitere Verarbeitung nachteilig, wenn ein Folienrand, mit 22 angedeutet, gegenüber dem Bogen 2''' vorsteht.

Es wird angestrebt, dass die Folie für die Kaschierung möglichst zugfrei, damit aber auch möglichst spannungsfrei zum Laminat verbunden wird. Viele Versuche haben gezeigt, dass sich der beim nassen Schneiden entstehende und abstehende Abrissrand 23 (Figur 2a) sofort ablegt und die Kleberverbindung, nach der Aushärtung, an der betreffenden Stelle der übrigen Verbindung fast ebenbürtig ist. In der Figur 2a ist ferner die eigentliche Kaschierung auch hier zum leichteren Verständnis überzeichnet durch das Kaschierwalzenpaar 7 beziehungsweise die Folienwalze 19 und die Bogenwalze resp. Gegendruckwalze 20 strichliert dargestellt. Mit einem Zeigefinger 24 über der Folienwalze 19 ist eine Schiebekraft "S" von rechts nach links auf die Folie 1 dargestellt. Der Zeigefinger ist mit zwei gekreuzten Linien markiert, womit zum Ausdruck gebracht werden soll, dass eine entsprechende Schubkraft "S" gerade nicht wirken soll, da sonst unkontrollierbare Kräfte, Spannungen usw. in das Laminat gebracht werden.

In der Figur 3a ist ein Laminat 8 Stoss an Stoss, in der Figur 3b überschuppt und in der Figur 3c unterschuppt dargestellt, mit einer jeweiligen optimalen Schneideinwirkung des Schneidmessers 10 zur Trennung des Laminates.

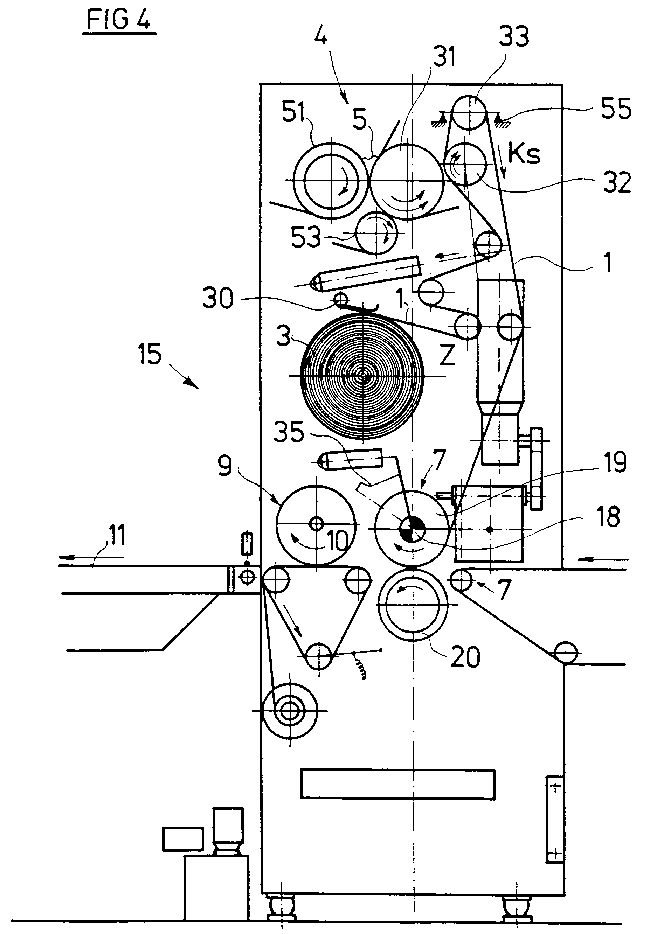

In der Figur 4 ist das Kaschierwerk 15 konkreter dargestellt. Die Rohfolie 1 wird von einer antriebslosen, jedoch mit einer leichten Rückhaltekraft bewirkenden Bremseinrichtung 30 von der Rohfolienrolle 3 abgezogen. Dabei ergibt sich eine variierende Zugkraft "Z", welche von einer Auftragswalze 31 sowie einer daran andrückbaren Anpresswalze 32 erzeugt wird. Von dem Inkrementalgeber 18, der Folienwalze 19 wird die Auftragswalze 31 gesteuert. Damit die mit Kleber versehene Folie 1 auf eine minimale Spannkraft Ks einstellbar ist, umschliesst die Folie eine Messwalze 33, welche die Drehzahl der Auftragswalze 31 übersteuert beziehungsweise auf die gewünschte Umfangsgeschwindigkeit auf Grund eines Spannungsmesswertes regelt. Ein Bogenzuführtisch 34 ist ebenfalls auf die wirksame Umfangsgeschwindigkeit der Folienwalze 19 gesteuert, so dass Bogen und Folie mit der selben Geschwindigkeit in das Kaschierwalzenpaar 7 geführt werden. Die Folie 1 weist dabei nur gerade eine so grosse Spannung auf, damit die Folie straff gespannt ist, aber nicht gezogen wird. Die Kaschierwalzen 7 weisen eine an sich bekannte Lagerung 35 auf, damit sich der Achsabstand mit entsprechend kleinen Kräften für die dickere Schuppenpartie kurzfristig vorgrössern kann.

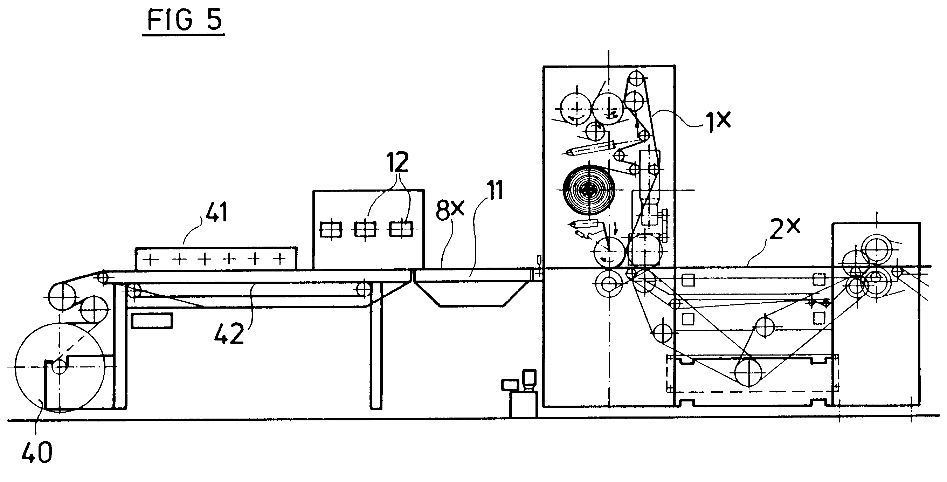

In Figur 5 ist eine Anlage für die Herstellung von Endlosbogen dargestellt. Dabei werden sowohl die Folie 1* wie die Bogen 2* endlos zugeführt. Das ebenfalls endlose Laminat 8* wird auf einer Laminatrolle 40 aufgerollt. In der Figur 5 ist ferner nach der Härtestation 12 eine Kühlstation 41, über einem Förderband 42 angeordnet.

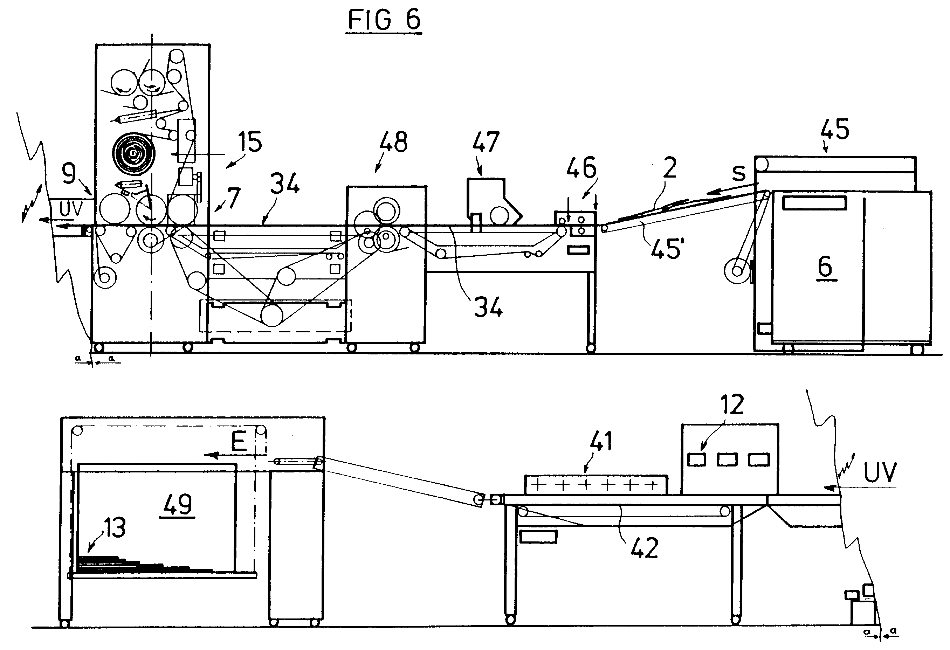

Die Figur 6 zeigt eine vollständige Anlage für das Kaschieren von Einzelbogen, in zwei Hälften dargestellt. Die rohen Bogen 2 werden von einem Bogenstapel 6 durch einen Anleger 45 einer Ausrichtstation 46 übergeben, von welcher die Bögen in gewünschter Über- beziehungsweise Unterschuppung dann einer Reinigungsbürste 47 und anschliessend einem Press- und Reinigungskalander 48 zum Pressglätten der Bögen 2 zugeführt werden. Anschliessend an die Kaschierstation 15 die Schneidstation zur Leimverfestigung 12 und anschliesend an die Kühlstation 41 für die gehärteten Bögen, befindet sich ein Ableger 49, in dem die fertigen Bogen zu einem Laminatstapel 13 aufgeschichtet werden.

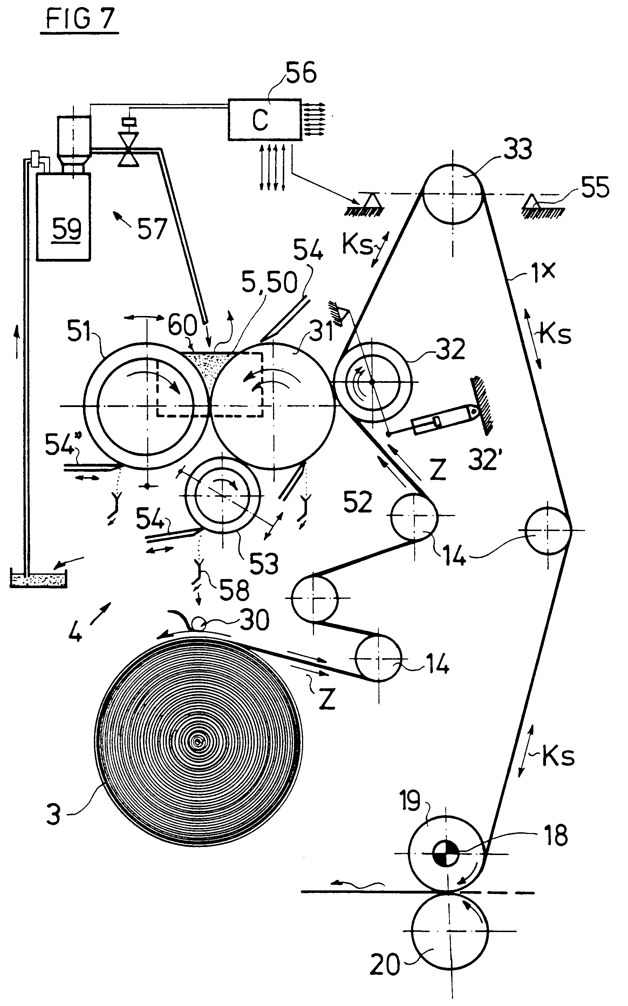

In der Figur 7 ist das Auftragswerk 4 in vergrössertem Massstab dargestellt. Der Kleber 5 ist hier als Fluten 50 in dem Einzugsspalt der Auftragswalze 31 sowie einer Dosierwalze 51 dargestellt. Vorzugsweise wird die Auftragswalze 31 aus Stahl, die Dosierwaze jedoch mit einem Gummimantel versehen. Die Drehzahl der Auftragswalze 31 wird in Abhängigkeit des Inkrementalgebers 18 der Folienwalze 19 gesteuert. Die wesentlich langsamer umlaufende Dosierwalze 51 (ein Pfeil) richtet sich sowohl nach der gewünschten Geschwindigkeit der Folie 1 wie auch nach der je gewünschten Schichtdicke des Kleberauftrages. Da die Auftragswalze 31 schneller dreht (2 Pfeile) als die Dosierwalze 51 bleibt der Kleberfilm auf der Auftragswalze 31. Die Kleberfilmdicke wird aber bewusst grösser gewählt als die gewünschte Auftragsdicke auf der Folie 1. Der Kleberüberschuss kann entweder durch ein einstellbares Rakel 52 oder eine unabhängig in der Drehzahl einstellbare Verteilwalze 53 abgenommen werden. Bei der einstellbaren Rakel 52 erfolgt dies durch die Spaltdicke, bei der Verteilwalze durch Variiern der Drehzahl und/oder des Dosierabstandes. Je nach Aufgabenstellung können bei allen Walzen Reinigungsrakel zum Beispiel auch für die seitliche Begrenzung des Kleberauftrages eingesetzt werden. Wichtig ist jedoch, dass das Geschwindigkeitsverhältnis der Auftragswalze 31 zu der Dosierwalze 51 unabhängig einstellbar ist, ebenso der Anpressdruck beziehungsweise der Dosierspalt zwischen der Auftragswalze 31 und der Verteilwalze 53.

Als weiteren wichtigen Punkt für eine optimale Kleberauftragung hat es sich ferner erwiesen, dass unabhängig der "Kleberwalzen" (der Auftragwalze 31, der Dosierwalze 51 sowie der Verteilwalze 53) die Anpresswalze 32 Mittel 32' aufweist zur unabhängigen Anpressung der Anpresswalze 32 auf die Auftragswalze 31. Die Anpresswalze 32 wird vorzugsweise nicht motorisch angetrieben. Auf diese Weise kann jede Teilfunktion unabhängig optimiert werden. Die Messwalze 33 wird vorzugsweise auf wegfreien Kraftmesslagern 55 gelagert. Es ist dazu eine Regeleinrichtung vorgesehen, welche rechnerunterstützt über Rechnermittel 56 die Umdrehungsgeschwindigkeit der Auftragswalze 31 auf eine bestimmte vorwählbare Spannkraft Ks von zum Beispiel einigen hundert Gramm regelt, damit die Folie zugfrei in die Kaschierung geführt werden kann. Vom Rechner 56 können ebenfalls die übrigen Steuerbefehle abgegeben werden, zum Beispiel für die Kleberdosier- und Umlaufstation 57. Aller Kleberüberschuss wird über entsprechende Auffangtrichter 58 über eine Pumpleitung wieder in den Klebertank 59 geleitet. Die Flute 50 kann über der Auftragswalze 31 und Dosierwalze 51 über ein Seitenrakel 60 überfliessen. Auch dieser Überschuss geht zurück in den Klebertank 59.

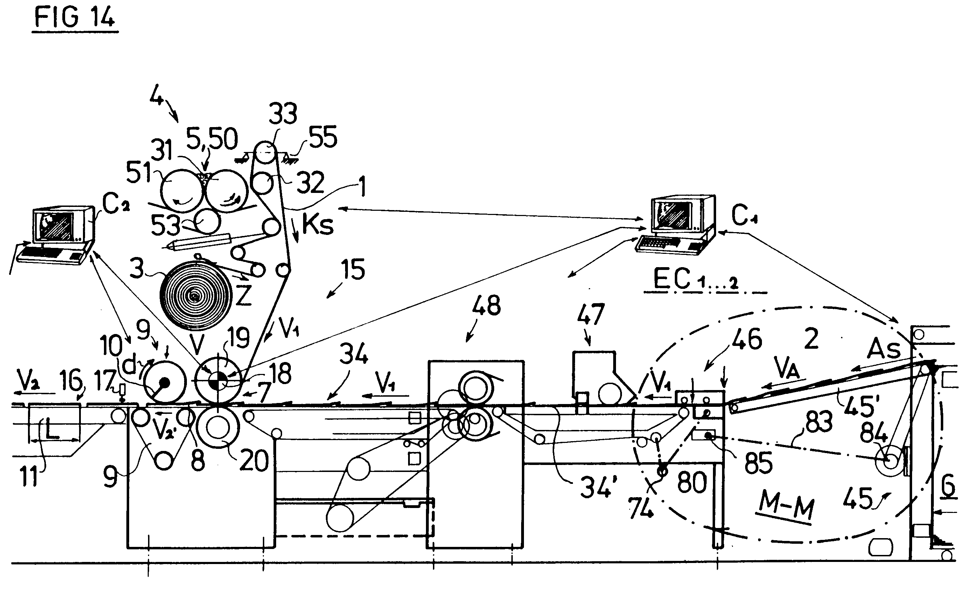

In der Folge wird nun auf die Figur 14 Bezug genommen. Die Figur 14 zeigt rein schematisch den Vorgang des Kaschierens einzelner Bogen mit einer Folie 1 in einem Kaschierwerk 15. Die Folie 1 wird als endlose Bahn von einer Rohfolienrolle 3 abgezogen und dabei auf einer Seite mit einem flüssigen Kleber beschichtet. Der UV-polymerisierbare Kleber wird über ein Auftragswerk 4 aufgetragen und verteilt. Die mit Kleber beschichtete Folie 1 wird anschliessend den Kaschierwalzen 7 zugeführt. Die Einzelbogen 2 werden von einem Bogenstapel 6 entnommen und mit Hilfe eines Bogenanlegers 45 in Pfeilrichtung (VA, V1) hintereinander ebenfalls in den Walzenspalt der Kaschierwalzen 7 eingeführt. Das in den Kaschierwalzen gebildete endlose Laminat 8 wird mit dem Schneidmesser 10 der Schneidstation 9 in Laminatabschnitte 16 getrennt, wobei lediglich die Folie 1 durchgeschnitten wird. Die Laminatabschnitte 16 gelangen dann auf eine Transportvorrichtung 11, auf welcher sie eine Härtestation 12 durchlaufen, und der Kleber durch UV-Strahlen ausgehärtet wird. Anschliessend werden die Laminatabschnitte 16 auf einen Laminatstapel 13 gelegt (Figur 6). Die Kaschierwalzen 7 bestehen aus einer oberen Folienwalze oder Mutterwalze 19 sowie einer unteren Bogenwalze oder Gegendruckwalze 20.

Die Schneidstation 9 weist auf der Folienseite ein thermisches Schneidmesser 10 auf, das an einem Messerbalken befestigt ist und sich über die gesamte Breite des Laminates 8 erstreckt. Der Messerbalken dreht sich in Pfeilrichtung d, also gleichsinnig zur Vorschubrichtung des Laminates 8. Das Schneidmesser beschreibt dabei eine Umlaufbahn. Das Schneidmesser 10 besteht vorzugsweise aus einem elektrischen Draht oder aus einem feinen Metallstreifen, der durch elektrischen Wiederstand aufgeheizt werden kann. Nach der Schneidstation 9 ist im Vorschubbereich des Laminates 8 eine Lichtschranke oder irgend ein anderer geeigneter Messgeber 17 angeordnet, mit dessen Hilfe die Vorderkante eines Laminatabschnitts ermittelt werden kann. Durch eine etwas erhöhte Geschwindigkeit an der Transportvorrichtung 11 ist dafür gesorgt, dass die getrennten Laminatabschnitte 16 sofort abgezogen werden und dass dadurch zwischen den einzelnen Laminatabschnitten 16 ein Zwischenraum entsteht. Die Geschwindigkeit des Laminates 8 wird beispielsweise über einen Inkrementalgeber 18 am Kaschierwalzenpaar 7 ermittelt. Aufgrund der ermittelten Werte aus den Gebern 17 und 18 und in Abhängigkeit der vorher in die Steuervorrichtung eingegebenen Bogenlägen wird jeweils der nächstfolgende Schneidvorgang gesteuert beziehungsweise geregelt. Erfindungsgemäss wird angestrebt, dass die Folie für die Kaschierung ohne Schubkräfte und möglichst zugfrei, damit aber auch möglichst spannungsfrei zum Laminat verbunden wird. Viele Versuche haben gezeigt, dass ein, beim nassen Schneiden entstehender und abstehender Abrissrand sich sofort ablegt und die Kleberverbindung, nach der Aushärtung, an der betreffenden Stelle der übrigen Verbindung ebenbürtig ist.

Selbstverständlich könnte die Anlage auch für andere Klebverbindungen ausgestaltet sein. Dabei könnten lösungsmittelhaltige Kleber, Dispersionskleber oder gar vorbeschichtete Folien eingesetzt werden. Je nach Art des ein gesetzten Klebers würde eventuell die Aushärtestation 12 (Figur 6) nach der Schneidstation 9 wegfallen und an deren Stelle könnte ein Trockner vor die Kaschierwalzen 7 treten. Die Schneidstation 9 könnte auch nach der Aushärtestation angeordnet sein. Das erfindungsgemässe Verfahren erlaubt es jedoch, das Trennen der Folie unmittelbar nach dem Verlassen des Kaschierwalzenpaares nass durchzuführen. In bestimmten Fällen ist es vorteilhaft, das Laminat 8 zunächst auf eine Rolle aufzuwickeln und die Rolle zu einem späteren Zeitpunkt in einer separaten Vorrichtung zu Einzelabschnitten 16 aufzuteilen.

Die Rohfolie 1 wird von einer antriebslosen, jedoch mit einer leichten Rückhaltekraft bewirkenden Bremseinrichtung von der Rohfolienrolle 3 abgezogen. Dabei ergibt sich eine variierende Zugkraft "Z", welche von einer Auftragswalze 31 sowie einer daran andrückbaren Anpresswalze 32 erzeugt wird. Von dem Inkrementalgeber 18 der Folienwalze 19 wird die Auftragwalze 31 gesteuert. Damit die mit Kleber versehene Folie 1 auf eine minimale Spannkraft Ks einstellbar ist, umschliesst die Folie eine Messwalze 33, welche die Drehzahl der Auftragwalze 31 übersteuert beziehungsweise auf die gewünschte Umfangsgeschwindigkeit auf Grund eines gewünschten Spannungsmesswertes regelt. Ein Bogenzuführband 34 ist ebenfalls auf die wirksame Umfangsgeschwindigkeit der Folienwalze 19 angetrieben, so dass Bogen und Folie mit der selben Geschwindigkeit in das Kaschierwalzenpaar 7 geführt werden. Die Folie 1 weist dabei nur gerade eine so grosse Spannung auf, damit die Folie straff gespannt ist, aber nicht gezogen wird. Die Kaschierwalzen 7 weisen eine an sich bekannte Lagerung auf, damit sich der Achsabstand mit entsprechend kleinen Kräften für die dickere Schuppenpartie kurzfristig vergrössern kann. Die wesentlich langsamer umlaufende Dosierwalze 51 (ein Pfeil) richtet sich sowohl nach der gewünschten Geschwindigkeit der Folie 1 wie auch nach der je gewünschten Schichtdicke des Kleberauftrages. Da die Auftragswalze 31 schneller dreht (2 Pfeile) als die Dosierwalze 51 bleibt der Kleberfilm auf der Auftragswalze 31. Die Kleberfilmdicke wird aber bewusst grösser gewählt als die gewünschte Auftragsdicke auf der Folie 1. Der Kleberüberschuss kann entweder durch ein einstellbares Rakel oder eine unabhängig in der Drehzahl einstellbare Verteilwalze 53 abgenommen werden. Bei der einstellbaren Rakel erfolgt dies durch die Spaltdicke, bei der Verteilwalze durch Variiern der Drehzahl und/oder des Dosierabstandes. Je nach Aufgabenstellung können bei allen Walzen Reinigungsrakel zum Beispiel auch für die seitliche Begrenzung des Kleberauftrages eingesetzt werden. Wichtig ist jedoch, dass das Geschwindigkeitsverhältnis der Auftragswalze 31 zu der Dosierwalze 51 unabhängig einstellbar ist, ebenso der Anpressdruck beziehungsweise der Dosierspalt zwischen der Auftragswalze 31 und der Verteilwalze 53. Als weiteren wichtigen Punkt für eine optimale Kleberauftragung hat es sich ferner erwiesen, dass unabhängig der "Kleberwalzen" (der Auftragswalze 31, der Dosierwalze 51 sowie der Verteilwalze 53) die Anpresswalze 32 Mittel aufweist zur unabhängigen Anpressung der Anpresswalze 32 auf die Auftragswalze 31. Die Anpresswalze 32 wird vorzugsweise nicht motorisch angetrieben. Auf diese Weise kann jede Teilfunktion unabhängig optimiert werden. Die Messwalze 33 wird vorzugsweise auf wegfreien Kraftmesslagern 55 gelagert. Es ist dazu eine Regeleinrichtung vorgesehen, welche rechnerunterstützt über Rechnermittel C₂ die Umdrehungsgeschwindigkeit der Auftragswalze 31 auf eine bestimmte vorwählbare Spannkraft Ks von zum Beispiel einigen hundert Gramm regelt, damit die Folie zugfrei in die Kaschierung geführt werden kann. Vom Rechner C₂ können ebenfalls die übrigen Steuerbefehle abgegeben werden, zum Beispiel für eine Kleberdosier- und Auftragstation.

Die Figur 14 zeigt die steuertechnische Koordination der Hauptfunktionen insbesondere des Anlegers 45 beziehungsweise der Sequenz As, der Auslagegeschwindigkeit V1 beziehungsweise des Kaschierwerkes 15 und der Schneidstation 9, welche in dem gezeigten Beispiel über 2 Rechner C₁ und C₂ erfolgt. Der Rechner C₁ hat als eine Hauptfunktion die präzise Ermittlung der Sequenz As der Zubringerleistung des Anlegers 45. Das entsprechende Steuersignal ist mit JG S₂ angegeben. Die Sequenz As ergibt sich dabei als Funktion von Verarbeitungstempo (V1), der Bogenlänge L, des Messes der Überbeziehungsweise Unterschuppung X beziehungsweise eines allfälligen Folge-Abstandes von Bogen zu Bogen. Da alle diese Werte exakt messbare, beziehungsweise festlegbare physikalische Grössen sind, bieten dazu elektronische Rechnermittel (E-C) ganz besondere Vorteile. Andererseits hat es sich aber gezeigt, dass das eigentliche "Handling" der Bogen erfindungsgemäss mit rein mechanischen Mitteln wesentlich wirtschaftlicher durchfürhbar ist. Ausgehend von den rechnersteuerbaren Grundgrössen:
- das Verarbeitungstempo (V1) sowie
- die Anlegersequenz (As)
wird der Rest mit überraschend einfachen mechanischen Mitteln M-M "erlegigt. Es ist möglich, den Rechner C₂ als Hauptrechner zu verwenden und zum Beispiel in dem Bereich des Ablegers anzuordnen. C₂ ist damit auch Eingabestation für die Anlage. C₁ kann auf derselben Komfortstufe aufgebaut sein, als zweiten Hauptrechner oder als untergeordneter Rechner. Wesentlich ist die Koordination. Es kann aber auch nur ein einziger Rechner verwendet werden.

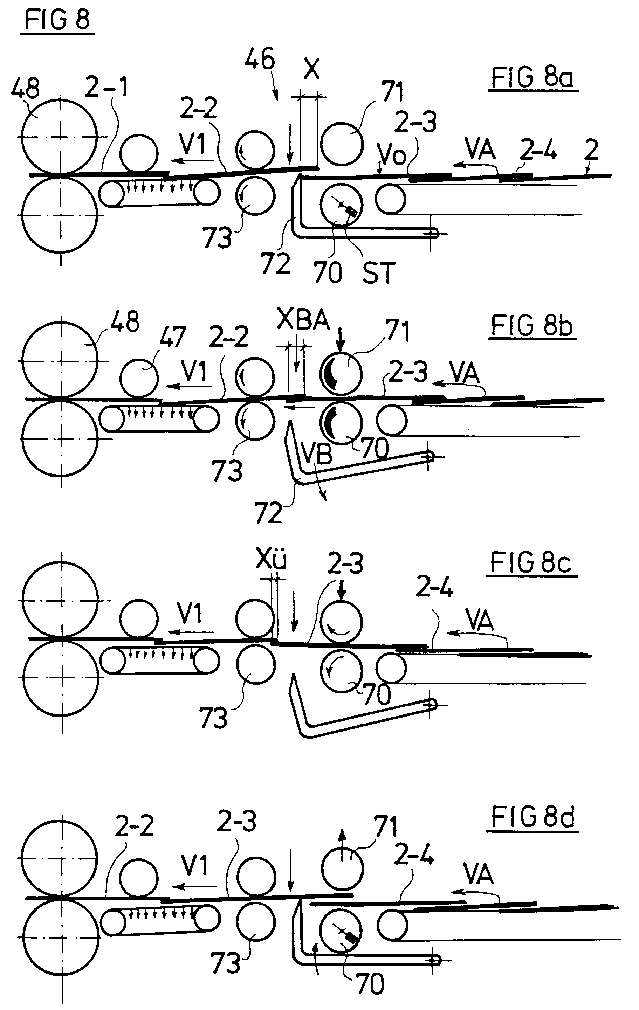

Die Figuren 8a - 8d zeigen verschiedene Phasen der Ausrichtstation 46. Ein Herzstück der Ausrichtstation 46 ist eine Beschleunigungswalze 70 mit ein- und ausrückbaren Klemmrollen 71, sowie einem steuerbaren Anschlag 72. Die Bogen 2 werden mit grosser Unterschuppung über ein Förderband 45' vom Anleger 45 zugeführt und gleiten ungehindert mit der Zufördergeschwindigkeit VA über die Beschleunigungswalze 70 (Figur 8a). Die Zuführgeschwindigkeit VA ist dabei wesentlich tiefer als die Anlagegeschwindigkeit V1. Die Ausrichtstation 46 hat drei Hauptaufgaben:
Erstens muss jeder Bogen von seiner ursprünglichen Geschwindigkeit VA auf die Anlagegeschwindigkeit V1 beschleunigt werden. Zweitens muss zum Beispiel eine präzise Über- beziehungsweise Unterschuppung oder eine Stoss an Stoss-Anordnung hergestellt werden. Drittens sollen unkomplizierte, betriebssichere Mittel verwendbar sein. Dabei dürfen an den Bögen keinerlei Press-, Klemm- oder Reibspuren gemacht werden, da diese sonst die Qualität des Laminates in Frage stellen. Ein ganz besonderes Erschwernis liegt darin, dass a) die Anlagegeschwindigkeit V1 sich nach den Kriterien des Kaschierens richtet und b) die Bögen jedes beliebigen Längenmasses L haben können und c) das Mass der Über- oder Unterschuppung oder gegebenenfalls ein Abstand wählbar sein soll. Die von der Ausrichtstation eingestellte Bogenfolge muss bis zu der Kaschierstation 15 unverändert bleiben.

In den Figuren 8a - 8d ist ein volles Taktspiel dargestellt. In der Figur 8a bleibt der Anschlag 72 in Stopposition bis sich eine bestimmte Unterschuppung X von Bogen 2-2 zu 2-3 einstellt. Die Beschleunigungswalze ist zu diesem Zeitpunkt über eine Bremskupplung arretiert (ST). Dann wird der Anschlag 72 ausgeklappt: in der Zwischenzeit verkleinert sich die Unterschuppung XBA, als Anfang der Beschleunigung des Bogens 2-3 (Figur 8b). Die Klemmrollen 71 werden eingerückt und auf die Beschleunigungswalzen 70 leicht angedrückt, gleichzeitig wird ein Beschleunigungs-Antrieb eingeschaltet und der bis dahin stillstehende Bogen 2-3 so lange beschleunigt (VB), bis der Bogen 2-3 die identische Geschwindigkeit (V1) hat, wie der Bogen 2-2. Gemäss der Figur 8c fördert nun die Beschleunigungswalze 70 den Bogen 2-3 bis der Bogen 2-3 von einem Führungswalzenpaar 73 erfasst worden ist. Die Figur 8c zeigt das Ende der Beschleunigung und gleichzeitig den Zustand der vorgewählten Über- beziehungsweise Unterschuppung Xü, welche von diesem Zeitpunkt an unverändert erhalten bleibt. Die Beschleunigungswalze bewegt sich nun gleich schnell, wie V1. Die Figur 8d zeigt die Position, in der der Bogen 2-3 voll unter der Kontrolle des Führungswalzenpaares 73 ist, so dass nun die Klemmrollen 71 ausrücken und die Beschleunigungswalzen abgebremst werden können. Der nächste Bogen 2-4 fährt bereits auf den Anschlag 72 zu, der in der Zwischenzeit wieder in die Stopposition gefahren ist. Der Vorgang wiederholt sich nun entsprechend Figur 8a.

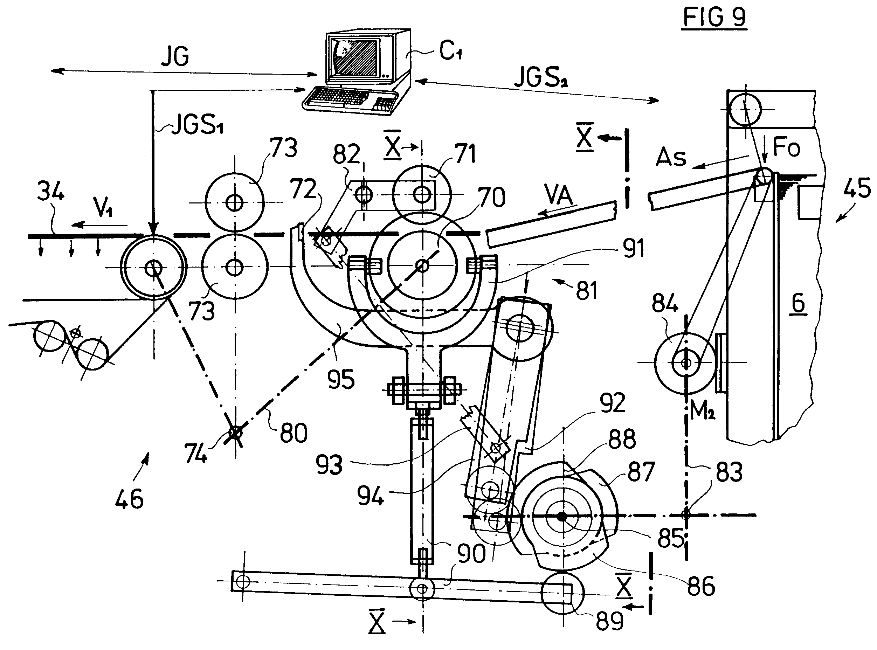

In der Figur 9 sind die Steuergrundfunktionen der Ausrichtstation 46 dargestellt. Ein Rechner C₁ ist an einen Inkrementalgeber JG der nachfolgenden Verarbeitungsanlage angeschlossen, wobei schematisch nicht dargestellte Antriebsmittel 74 ein Zuführband 34' mit der Geschwindigkeit V1 der Verarbeitungsanlage antreibbar ist. Die Beschleunigungswalze 70 mit einem mechanischen Übertrieb, Mittellinie 80 mit den verarbeitungssprozessseitigen Antrieben 74 direkt verbindbar. Anderseits ist der Anschlag 72, ein Kupplungshebel 91 sowie eine Ein- und Ausrückmechanik 82 für die Führungsrollen 71, direkt über entsprechende Übertriebsmittel 83 von einer Antriebseinheit 84 des Anlegers 45 beziehungsweise anlegerseitig steuerbar. Für alle drei Steuerfunktionen ist eine gemeinsame Steuerwelle 85 vorgesehen, an welcher entsprechend den drei Funktionen drei Kurvenscheiben 86, 87 und 88 angeordnet sind. Die Kurvenscheibe 86 ist in einem direkten Eingriff mit einer Abgreifrolle 89, einem Hebelgelenk 90 sowie einem Kupplungshebel 91 für die Kupplung 81. Die Kurvenscheibe 87 steuert über einen Hebel 92 sowie eine Verbindungsstange 93 die Ein- und Ausrückmechanik 82. Die dritte Kurvenscheibe 88 steuert über einen Hebel 94 einen Dreharm 95 des Anschlages 72.

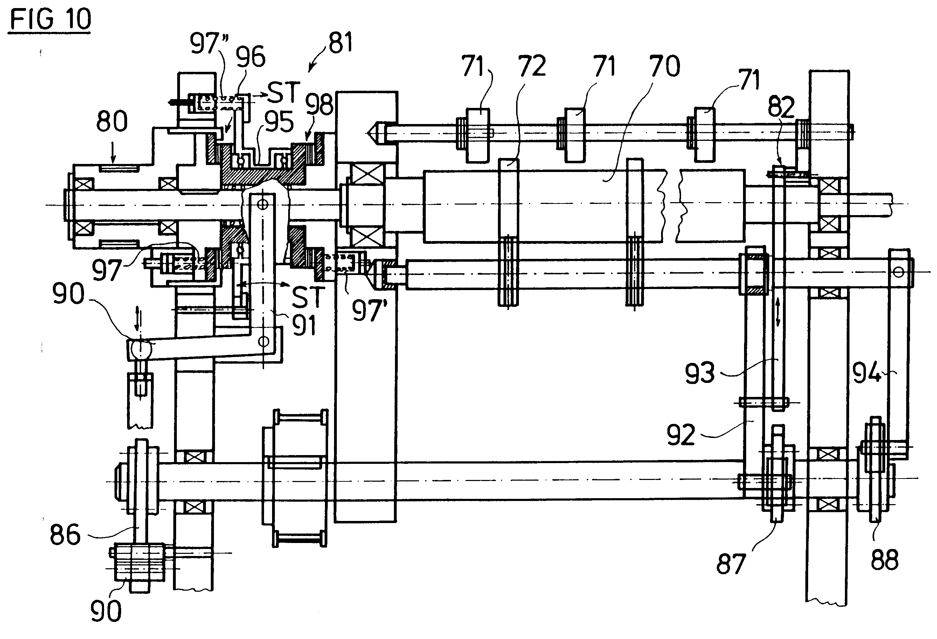

In der Figur 10 ist die Ausrichtstation gemäss der Figur 3 teilweise als Schnitt und teilweise als Ansicht gemäss Pfeil X - X dargestellt, wobei die Kupplung 81 im Schnitt dargestellt ist. Über den Kupplungshebel 91 wird eine Schiebebüchse 95 horizontal verschoben und kann auf die linke Seite an die Beschleunigungskupplung 96 gepresst werden. Damit wird der mechanische Übertrieb 80 in Eingriff mit der Beschleunigungswalze 70 gebracht. Durch entsprechende Wahl des Rutschkupplungsbelages, der Hebelkräfte ein Einfederweg 99 sowie der Vorspannung beziehungsweise der Charakteristik eines Federsystems 97 wird eine sanfte Beschleunigung für die Beschleunigungswalze und damit für die Bogen erzeugt, dadurch, dass über einem wählbaren Umlaufweg eine schleifende Übertragung gewählt wird. Damit die Bewegung der Bogen vollständig unter Kontrolle gehalten bleiben, weist die Kupplung eine Gegenhälfte auf, welche als Bremskupplung 98 ausgebildet ist und in Koordination mit den übrigen Bewegungen im rechten Zeitpunkt die Beschleunigungswalze 70 still setzt. Durch Einstellen der entsprechenden Federkraft einer Einstellfeder 97' für die Bremskupplung kann auch hier die Verzögerungszeit eingestellt werden. Mit einer Feder 97'' wird die Schiebebüchse in einer Bremsbereitschaltstellung gehalten, auch bei abgeschalteter Steuerung.

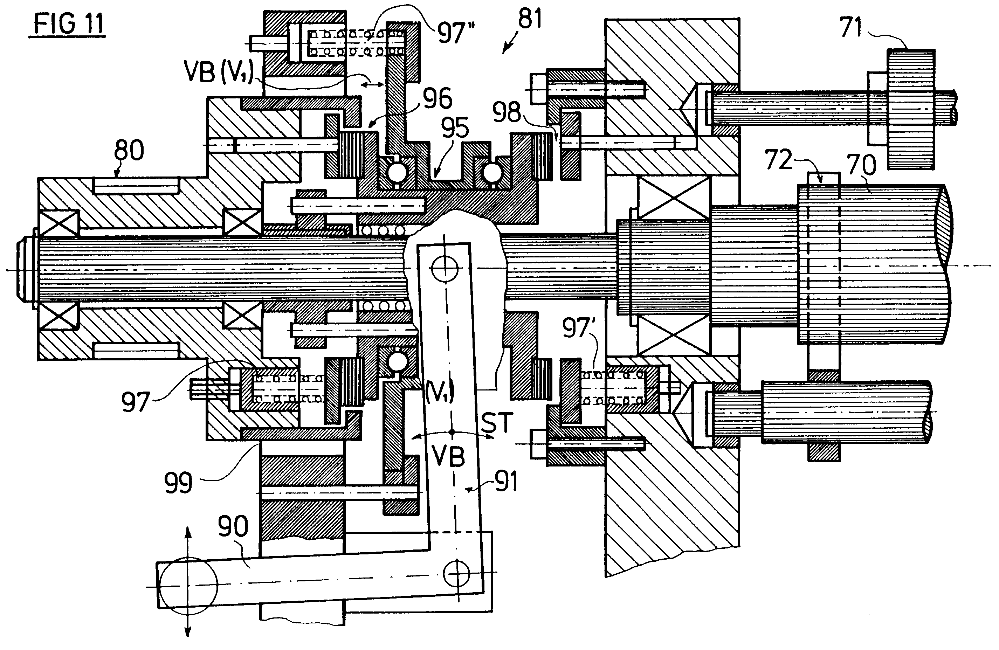

In der Figur 11 ist die Kupplung gemäss Figur 10 in grösserem Massstab nochmals dargestellt.

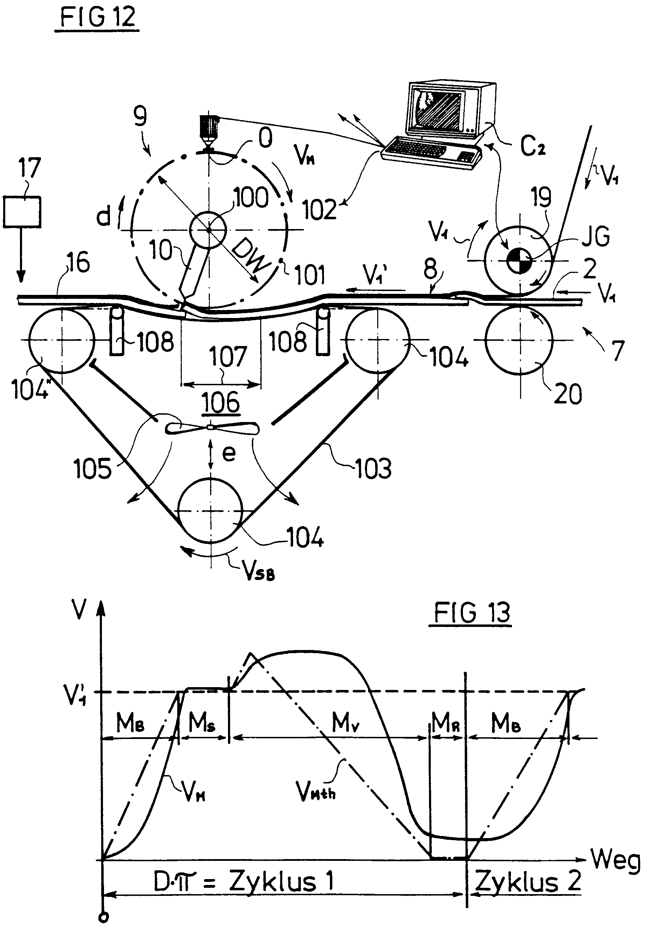

In der Folge wird nun auf die Figuren 12 und 13 Bezug genommen, welche die Kaschierung des Laminates sowie der Erzeugung der Laminatabschnitte für ein Nassschneiden der Folie zeigen. Das Schneidmesser 10 führt bezüglich einer Drehachse 100 eine Rotationsbewegung aus, wobei der Wirkkreis des Schneidmessers, das ein an sich bekanntes thermisches Schneidmesser sein kann, strichpunktiert, mit einer Kreislinie 101 eingezeichnet ist. Die normale Drehrichtung ist mit d angegeben, der Durchmesser des Wirkkreises 101 mit DW. Der Antrieb 102 ist nicht dargestellt, kann eine an sich bekannte Ausführung sein. Der Antrieb 102 muss für eine sehr präzise und eine extrem wechselnde Schnelligkeit der Umlaufbewegung des Schneidmessers ausgelegt und entsprechend von einem Rechner C₂ aus steuerbar sein. Das Laminat bewegt sich von den Kaschierwalzen 7 her horizontal auf einem mit der gleichen Geschwindigkeit V1 mitlaufenden Saugband 103, das über drei Umlenkrollen 104, 104' beziehungsweise 104'' mit einer genügenden Vorspannung e gespannt ist. Ein Ventilatorrad 105 symbolisiert die Funktion eines Unterdruckes für eine kleine Kammer 106. Dadurch wird das Laminat nicht nur vom Stützband 103 mitbewegt, sondern gleichzeitig mit einer entsprechenden Haftkraft des Saugbandes 103 durch die Schneidstation 9 geführt. Ausserhalb eines Bereiches 107, in dem der Schneideingriff des Schneidmessers 10 erfolgt, sind unterhalb des Stützbandes 103 zwei Auflagestellen 108 beziehungsweise 108' angeordnet. Die effektive Schneidbahn beziehungsweise Kreislinie 101 ist um ein geringes Mass tiefer, gegenüber der ungestörten Bewegungsbahn des Laminates, so dass das Schneidmesser 10 das Laminat entsprechend nach unten drückt, wobei nicht nur die Wärmeeinwirkung sondern gleichzeitig auch eine geringe mechanische Schneidkraft wirkt.

Die Figur 13 ist ein Beispiel für ein Diagramm für den Geschwindigkeitsverlauf des Messers über einer Umlaufbewegung beziehungsweise über einen ganzen Zyklus 1 wiedergegeben. Dabei bedeuten MB Messerbeschleunigung, Ms Messerschneidkontakt, Mv, Messerverzögerung und MR Messerruhezone. Das Diagramm, das die Geschwindigkeit über dem Weg darstellt, zeigt sehr deutlich, wie das Messer vor dem Schnitt extrem beschleunigt wird (Vm) bis zu der Geschwindigkeit V1. Danach muss das Messer mit dem Laminat gleich schnell mitbewegt werden und geht dann in eine Verzögerungsphase VMth über. Wichtig ist nun auch hier, dass nicht nur der Geschwindigkeitsverlauf während einer Umdrehung insbesondere für den Schnitt gesteuert wird, sondern, dass der Vorgang von einem Inkrementalgeber JG besonders vorzugsweise demselben wie für die Steuerung des Anlegers gesteuert wird, damit die Schneidfolge genau mit der bearbeiteten Bogenlänge übereinstimmt. Auch für das Schneiden treten nun aber im wesentlichen die selben variablen Parameter auf, es sind dies insbesondere die Anlagegeschwindigkeit V1 und die Bogenlänge L. Bevorzugt wird nun der Antrieb über Basisprogramme für den Bewegungsverlauf gesteuert, welche für die je spezifischen Anlagegeschwindigkeiten und Bogenlängen rechnerisch angepasst werden.

## Patentansprüche

1. Verfahren zur Herstellung von UV-Laminaten (8, 8*), wobei auf einer dünnen Folie (1) UV-polymerisierbarer Kleber verteilt aufgetragen und die Folie mit Einzel- oder Endlosbogen (2, 2*) durch ein Kaschierwerk (15) zu einem Laminat (8, 8*) vereinigt und mit UV-Strahlen fixiert wird,
**dadurch gekennzeichnet**,
dass Folie und Bogen auf eine gleiche Geschwindigkeit zum Kaschierwerk gebracht werden, und die mit UV-Kleber beschichtete Folie (1) schubkraftfrei, schwimmend mit geringer Presskraft und möglichst spannungsfrei auf den Bögen (2, 2*) aufgewalzt wird.

2. Verfahren nach Anspruch 1,
**dadurch gekennzeichnet**,
dass die Folie (1) mit weniger als 100 N/cm, vorzugsweise mit 10 - 50 N/cm aufgewalzt wird.

3. Verfahren nach Anspruch 1,
**dadurch gekennzeichnet,**
dass die Folie (1) nach der Kleberauftragung über eine wegfreie Zug-Messwalze (33, 55) geführt und mit minimaler Kraft gestrafft und durch entsprechende Regelung der Drehzahl der Auftragwalze (31) auf die Kaschiergeschwindigkeit (IG) gebracht wird.

4. Verfahren nach Anspruch 1,
**dadurch gekennzeichnet**,
dass beim Laminieren von Einzelbögen (2) die effektive Kaschiergeschwindigkeit (IG) festgestellt, über Rechnermittel (C1) in Abhängigkeit der Bogenlänge die Sequenz der Anlegerleistung (As) ermittelt und die Bogenfolge über gesteuerte Mittel erzeugt wird.

5. Verfahren nach Anspruch 1,
**dadurch gekennzeichnet**,
dass zur Herstellung einer präzisen Über- beziehungsweise Unterschuppung oder einer Stoss an Stoss-Folge von Bogen und Zuführung derselben mit wählbarer Kaschiergeschwindigkeit, die mit grosser Schuppung kontinuierlich und langsamer zugeführten Bogen mittels eines regelbaren Walzenpaares über eine Wegstrecke von weniger als einer halben Bogenlänge auf die Kaschiergeschwndigkeit sanft beschleunigt werden.

6. Verfahen nach Anspruch 1,
**dadurch gekennzeichnet**,
dass bei der Verarbeitung von Einzelbogen (2) das Laminat (8), bestehend aus einer bahnförmigen, mit Kleber beschichteten Folie und aus, durch die beschichtete Folie (1) miteinander verbundenen Einzelbogen (2) von dem Kaschierwerk (15) kontinuierlich an einer Schneidstation (9) vorbeigeführt und vor der UV-Härtung (12) nass geschnitten wird.

7. Verfahren nach Anspruch 6,
**dadurch gekennzeichnet**,
dass die Folie (1) mit einem thermischen Schneidmesser (10) nass geschnitten wird.

8. Verfahren nach einem der Ansprüche 1 bis 7,
**dadurch gekennzeichnet**,
dass der auf die Folie (1) aufgetragene Kleber vor dem Kaschieren einer Stabilisierung oder Aktivierung unterworfen und nach dem Kaschieren einer Härtung zugeführt wird.

9. Vorrichtung zur Herstellung von UV-Laminaten (8, 8*) bestehend aus einer dünnen Folie (1) sowie Einzel- oder Endlosbogen (2, 2*), welche ein Kaschierwerk (15) mit Folienwalze (19) und Bogenwalze (20), eine UV-Härtung (12), ferner eine Bogen- und Folienzuführung aufweist,
**dadurch gekennzeichnet**,
dass der Bogen- und Folienzuführung Steuermittel (C1) zugeordnet sind zur Zuführung von Folie (1) und Bogen (2, 2*) mit der gleichen Geschwindigkeit (V1) wie die Kaschiergeschwindigkeit (IG), und dass sowohl die Folienwalze (19) wie die Bogenwalze (20) Antriebsmittel mit einer zugeordneten Regeleinrichtung aufweisen, so dass die Folie (1) schubkraftfrei, schwimmend mit geringer Presskraft und möglichst spannungsfrei auf den Bogen (2, 2*) aufwalzbar ist.

10. Vorrichtung nach Anspruch 9,
**dadurch gekennzeichnet**,
dass die Antriebsmittel für die Folienwalze und für die Bogenwalze mit einer Regeleinrichtung ausgebildet sind für eine im wesentlichen identische Führungsgeschwindigkeit (V1) für Folie (1) und Bogen (2, 2*) und die Folienzuführung als folienzugkraftregelbares Folienführwerk ausgebildet ist.

11. Vorrichtung nach Anspruch 9,
**dadurch gekennzeichnet**,
dass die Folienwalze (19) als Steuerleitwalze ausgebildet ist, von welcher aus über Rechnermittel (C1, C2) die Kleberauftragung und/oder eine Schneidstation und/oder ein Anleger und/oder eine Ausrichtstation steuerbar ist.

12. Vorrichtung nach einem der Ansprüche 9 bis 11,
**dadurch gekennzeichnet**,
dass sie eine Mengendosierung für einen kontinuierlichen Kleberauftrag (4) auf die Folie (1) mit einer Auftragswalze (31) sowie einer Dosierwalze (51) aufweist, wobei der Auftragswalze (31) Drehzahlsteuermittel, insbesondere auf Grund einer Verarbeitungsgeschwindigkeit (IG) der Folie (1) zur Basissteuerung zugeordnet sind, wobei zu der Drehzahlsteuerung der Auftragwalze (31) eine in Abhängigkeit der Zugspannung (Ks) der beschichteten Folie (1) wirksame Drehzahlregelung übergeordnet ist.

13. Vorrichtung nach Anspruch 9,
**dadurch gekennzeichnet**,
dass sie eine Schneidstation (9) mit einem thermischen Schneidmesser (10) aufweist, welche zwischen dem Kaschierwerk (15) und der UV-Härtung (12) angeordnet ist, zum Naßschneiden der Folie (1) und Trennen des Laminates (8) bestehend aus Folie (1) und Einzelbögen (2).

14. Vorrichtung nach Anspruch 13,
**dadurch gekennzeichnet**,
dass die Schneidstation (9) ein mit der Geschwindigkeit (V1) des Laminates (8) mitbewegtes Schneidmesser (10) sowie Rechenmittel (C1, C2) und einen Drehzahlregel-Antrieb des Schneidwerkes aufweist, welches mit kreisendem Messerwerk ausgebildet ist und insbesondere in einem oberen Verzögerungs- oder Ruhebereich ein 0-Positions-Sensor aufweist.

15. Vorrichtung nach Anspruch 9,
**dadurch gekennzeichnet**,
dass sie eine Ausrichtstation (46) mit Bogenanleger (45) aufweist, zum Herstellen einer Bogenfolge von Einzelbogen auf einem Zuführband (34) zu dem Kaschierwerk (15), wobei der Bogenanleger (45) über Rechnermittel (C1) steuerbar ist, welche in Funktionsverbindung mit einem Ist-Wert-Aufnehmer des Verarbeitungstempos (IG) der nachfolgenden Verarbeitungsanlage steht, sowie eine mechanisch steuerbare Bogenfolge-Erzeugungs-Vorrichtung aufweist.

16. Vorrichtung nach Anspruch 15,
**dadurch gekennzeichnet**,
dass die Ausrichtstation (46) zur Herstellung einer Bogenfolge mit einer präzisen Über- bzw. Unterschuppung oder einer Stoss an Stoss-Folge von Bogen und Zuführung derselben mit wählbarer Fördergeschwindigkeit ausgebildet ist und ein ein- und ausrückbares, regelbares Beschleunigungswalzenpaar (70, 71) für die Bögen aufweist.

17. Vorrichtung nach Anspruch 16,
**dadurch gekennzeichnet**,
dass sie einen mechanischen Anschlag (72) aufweist, der koordiniert mit den Betätigungsmitteln der Ein- und Ausrückvorrichtung (82) steuerbar ist, wobei das Beschleunigungswalzenpaar (70, 71) über eine steuerbare Rutschkupplung (81, 96, 97) antreibbar ist.

18. Vorrichtung nach Anspruch 9,
**gekennzeichnet**,
a) durch ein Kaschierwalzenpaar (7) mit Antriebsmitteln für eine im wesentlichen identischen Führungsgeschwindigkeit beider Walzen (19, 20),
b) einem Auftragwerk (4) mit einem steuer- beziehungsweise dosierbaren Kleberauftrag (31, 51, 53) sowie einem folienzugkraftregelbaren Folienführwerk (33, 55)
c) einer Ausrichtstation (46) mit einer mechanisch steuerbaren Bogenfolge-Erzeugungsvorrichtung (45)
d) sowie einer Naßschneidstation, mit (9) einem in der Umlaufgeschwindigkeit steuerbaren Messerwerk (10),
wobei der Vorrichtung Rechnermittel (C1, C2) zugeordnet sind, in welche die Verarbeitungsgeschwindigkeit (V1) sowie die Bogenlänge (L) eingebbar ist, wobei über einen Incrementalgeber (18) des Hauptantriebes das Auftragwerk (4), die Ausrichtstation (46) sowie die Schneidstation (9) steuerbar sind.

## Claims

1. Method of producing UV-laminates (8, 8*), wherein UV-polymerizable adhesive is applied in a distributed manner to a thin film (1) and the film is combined with individual or continuous sheets (2, 2*) by a laminator (15) to form a laminate (8, 8*) and is fixed by UV-radiation, characterized in that film and sheet are brought to the laminator at an identical speed and the UV-adhesive-coated film (1) is rolled onto the sheets (2, 2*) without shearing forces and as far as possible without tension in a floating manner with slight pressure.

2. Method according to Claim 1, characterized in that the film (1) is rolled with less than 100 N/cm, preferably with 10 - 50 N/cm.

3. Method according to Claim 1, characterized in that after application of adhesive, the film (1) is guided over a free pull-measuring roller (33, 55) and is tightened with minimal force and brought to the laminating speed (IG) by appropriate regulation of the speed of the application roller (31).

4. Method according to Claim 1, characterized in that during the lamination of individual sheets (2), the effective laminating speed (IG) is established, the sequence of the laying capacity (As) is determined as a function of the sheet length via computers (C1) and the sheet string is produced by controlled means.

5. Method according to Claim 1, characterized in that, to produce a precise overlap or underlap or an abutting string of sheets and to supply them at a selectable laminating speed, the sheets, which are supplied continuously and more slowly with pronounced imbrication, are gently accelerated to the laminating speed over a distance of less than half a sheet length by a regulatable pair of rollers.

6. Method according to Claim 1, characterized in that during the processing of individual sheets (2) the laminate (8) consisting of a strip-shaped adhesive-coated film and of individual sheets (2) connected to one another by the coated film (1) is guided continuously from the laminator (15) past a cutting station (9) and is cut wet prior to the UV-curing device (12).

7. Method according the Claim 6, characterized in that the film (1) is cut wet by a thermal cutting blade (10).

8. Method according to one of Claims 1 to 7, characterized in that the adhesive applied to the film (1) is subjected to stabilization or activation prior to lamination and is supplied to a curing process after lamination.

9. Apparatus for producing UV-laminates (8, 8*) consisting of a thin film (1) and individual or continuous sheets (2, 2*) comprising a laminator (15) with film roller (19) and sheet roller (20), a UV-curing device (12), also a sheet and film supply means, characterized in that the sheet and film supply means is allocated control means (C1) for supplying film (1) and sheets (2, 2*) at the same speed (V1) as the laminating speed (IG) and in that the film roller (19) as well as the sheet roller (20) comprises driving means with an associated regulator so the film (1) can be rolled onto the sheet (2, 2*) without shearing forces and as far as possible without tension in a floating manner with slight pressure.

10. Apparatus according to Claim 9, characterized in that the driving means for the film roller and for the sheet roller are designed with a regulator for a substantially identical guide speed (V1) for film (1) and sheet (2, 2*) and the film supply means is designed as a film guiding system with a regulatable film-pulling force.

11. Apparatus according to Claim 9, characterized in that the film roller (19) is designed as a control guide roller by means of which the adhesive applicator and/or a cutting station and/or a layer-on and/or an aligning station can be controlled via computers (C1, C2).

12. Apparatus according to one of Claims 9 to 11, characterized in that it comprises a metering means for a continuous application of adhesive (4) onto the film (1) with an application roller (31) as well as a metering roller (51), the application roller (31) being allocated speed controlling means, in particular on the basis of a processing speed (IG) of the film (1) for basic control, a speed regulator which acts as a function of the tensile stress (Ks) of the coated film (1) being placed above the application roller (31) for controlling the speed.

13. Apparatus according to Claim 9, characterized in that it has a cutting station (9) with a thermal cutting blade (10) which is arranged between the laminator (15) and the UV-curing device (12) for the wet cutting of the film (1) and severing of the laminate (8) consisting of film (1) and individual sheets (2).

14. Apparatus according to Claim 13, characterized in that the cutting station (9) has a cutting blade (10) moved at the speed (V1) of the laminate (8) and computers (C1, C2) and a speed regulating drive for the cutting system, which is designed with a rotating blade system and, in particular, has a 0-position sensor in an upper deceleration or rest region.

15. Apparatus according to Claim 9, characterized in that it has an aligning station (46) with sheet layer-on (45), for producing a sheet string of individual sheets on a supply belt (34) to the laminator (15), the sheet layer-on (45) being controllable via computer (C1) which is functionally connected to the pickup of the actual value of the processing rate (IG) of the subsequent processing device, and has a mechanically controllable sheet string production apparatus.

16. Apparatus according to Claim 15, characterized in that the aligning station (46) is designed for the production of a sheet string with a precise overlap or underlap or an abutting string of sheets and for the supply thereof at a selectable conveying speed and comprises an engagable and disengagable regulatable pair of accelerating rollers (70, 71) for the sheets.

17. Apparatus according to Claim 16, characterized in that it comprises a mechanical stop (72) which is controllable in coordination with the actuating means of the engagement and disengagement device (82), the pair or accelerating rollers (70, 71) being drivable via a controllable sliding clutch (81, 96, 97).

18. Apparatus according to Claim 9, characterized
a) by a pair of laminating rollers (7) with driving means for a substantially identical guide speed of the two rollers (19, 20),
b) an applicator (4) with a controllable or meterable application of adhesive (31, 51, 53) and a film guide mechanism (33, 55) with a regulatable film pull
c) an aligning station (46) with a mechanically controllable sheet string producing device (45)
d) and a wet cutting station with (9) a blade system (10) of controllable circumferential speed,
the apparatus being allocated computers (C1, C2) into which the processing speed (V1) and the sheet length (L) can be input, the applicator (4), the aligning station (46) and the cutting station (9) being controllable via an incremental transmitter (18) of the main drive.

## Revendications

1. Procédé pour la fabrication de stratifiés durcissables aux UV (8, 8*) , de la colle polymérisable aux UV étant appliquée et répartie sur un film mince (1) et le film étant réuni avec une feuille individuelle ou sans fin (2, 2*) au moyen d'un mécanisme de couchage (15) en un stratifié (8, 8*) et fixé au moyen de rayons UV, caractérisé en ce que le film et la feuille sont amenés à une vitesse identique au mécanisme de couchage et le film (1) enduit de colle pour UV est appliqué au rouleau sur les feuilles (2, 2*) sans force de cisaillement, de façon flottante avec une faible force de compression et si possible sans tension.

2. Procédé selon la revendication 1, caractérisé en ce que le film (1) est appliqué avec moins de 100 N/cm, de préférence avec 10 à 50 N/cm.

3. Procédé selon la revendication 1, caractérisé en ce que le film est guidé après l'application de la colle par un rouleau mesureur de traction (33, 55) sans déplacement, est tendu avec une force minimale et est amené à la vitesse de couchage (IG) par un réglage approprié du régime du rouleau d'application (31).

4. Procédé selon la revendication 1, caractérisé en ce que, lors du laminage des feuilles individuelles (2), la vitesse effective de couchage (IG) est constatée, la séquence de la puissance de l'applicateur (As) est déterminée par des ordinateurs (C1) en fonction de la longueur de la feuille et la séquence de feuille est générée par des moyens commandés.

5. Procédé selon la revendication 1, caractérisé en ce que, pour établir une imbrication précise par au-dessus ou au-dessous ou une succession joint à joint de la feuille et de l'alimentation de celle-ci avec une vitesse de couchage sélectionnable, les feuilles amenées en continu et plus lentement avec une grande imbrication sont accélérées en douceur jusqu'à la vitesse de couchage au moyen d'une paire de rouleaux réglables sur une distance de moins d'une demi-longueur de feuille.

6. Procédé selon la revendication 1, caractérisé en ce que, lors du traitement des feuilles individuelles (2), le stratifié (8), comprenant un film en forme de bande et enduit par colle et des feuilles individuelles (2) reliées entre elles par la feuille (1) enduite est passé par le mécanisme de couchage (15) en continu sur un poste de coupe (9) et est coupé par voie humide avant le durcissement aux UV (12).

7. Procédé selon la revendication 6, caractérisé en ce que le film (1) est coupé par voie humide avec un couteau de coupe (10) thermique.

8. Procédé selon l'une quelconque des revendications 1 à 7, caractérisé en ce que la colle appliquée sur le film (1) est soumise avant le couchage à une stabilisation ou une activation et est amenée au durcissement après le couchage.

9. Dispositif pour fabriquer des stratifiés durcissables aux UV (8, 8*) comprenant un film mince (1) ainsi que des feuilles individuelles ou sans fin (2, 2*), qui présente un mécanisme de couchage (15) avec rouleau à film (19) et rouleau à feuille (20), un durcissement aux UV (12) ainsi qu'une alimentation en feuille et film, caractérisé en ce qu'à l'alimentation en feuille et film sont attribués des organes de commande (C1) pour l'alimentation du film (1) et de la feuille (2, 2*) avec la même vitesse (V1) que la vitesse de couchage (IG) et en ce que le rouleau à film (19) et le rouleau à feuille (20) présentent des organes d'entraînement avec un système de réglage attribué, de sorte que le film (1) peut être appliqué au rouleau sur la feuille (2, 2*) sans force de poussée, de façon flottante avec une faible force de compression et si possible sans tension.

10. Procédé selon la revendication 9, caractérisé en ce que les moyens d'entraînement pour le rouleau à film et pour le rouleau à feuille sont conçus avec un système de réglage pour une vitesse de guidage (V1) sensiblement identique pour le film (1) et la feuille (2, 2*) et l'alimentation du film est conçue comme un mécanisme de guidage de film réglable par la force de traction de la feuille.

11. Dispositif selon la revendication 9, caractérisé en ce que le rouleau à film (19) est conçu comme un rouleau-guide de commande, à partir duquel l'application de la colle et/ou un poste de coupe et/ou un applicateur et/ou un poste d'alignement peut (peuvent) être contrôlé(s) au moyen d'ordinateurs (C1, C2).

12. Dispositif selon l'une quelconque des revendications 9 à 11, caractérisé en ce qu'il présente un système de dosage de quantité pour une application continue de la colle (4) sur le film (1) avec un rouleau applicateur (31) et un rouleau doseur (51), des moyens de commande de régime étant attribués pour la commande de base au rouleau applicateur (31), notamment sur la base d'une vitesse de traitement (IG) du film (1), un système de réglage de régime efficace en fonction de la tension de traction (Ks) du film (1) enduit étant superposé à la commande du régime du rouleau applicateur (31).

13. Dispositif selon la revendication 9, caractérisé en ce qu'il présente un poste de coupe (9) équipé d'un couteau de coupe (10) thermique, lequel est disposé entre le mécanisme de couchage (15) et le durcissement aux UV (12), pour le découpage par voie humide du film (1) et la séparation du stratifié (8) comprenant film (1) et feuille individuelle (2).

14. Dispositif selon la revendication 13, caractérisé en ce que le poste de coupe (9) présente un couteau de coupe (10) entraîné avec la vitesse (V1) du stratifié (8) ainsi que des ordinateurs (C1, C2) et un entraînement de réglage de régime du mécanisme de coupe, lequel est réalisé avec un mécanisme à couteau giratoire et présente en particulier un capteur de position 0 dans une zone supérieure de décélération ou de repos.

15. Dispositif selon la revendication 9, caractérisé en ce qu'il présente un poste d'alignement (46) avec applicateur de feuille (45), pour la préparation d'une séquence de feuilles individuelles sur une bande d'alimentation (34) allant au mécanisme de couchage (15), l'applicateur de feuille (45) étant contrôlable par un ordinateur (C1), poste qui est dans une relation de fonction avec un enregistreur de valeur réelle du rythme de traitement (IG) de l'installation de traitement suivante, et présente un dispositif de génération de séquence de feuille avec possibilité de contrôle mécanique.

16. Dispositif selon la revendication 15, caractérisé en ce que le poste d'alignement (46) pour préparer une séquence de feuille avec une imbrication précise par au-dessus ou au-dessous ou une séquence joint contre joint de la feuille et de l'alimentation de celle-ci est conçu avec une vitesse d'avancement sélectionnable et présente une paire de rouleaux d'accélération (70, 71) réglable, embrayable et débrayable, pour les feuilles.

17. Dispositif selon la revendication 16, caractérisé en ce qu'il présente une butée mécanique (72) qui peut être commandé de façon coordonnée avec les moyens d'actionnement du dispositif d'embrayage et de débrayage (82), la paire de rouleaux d'accélération (70, 71) pouvant être entraînée par un accouplement patinant (81, 96, 97) contrôlable.

18. Dispositif selon la revendication 9, caractérisé par
a) une paire de rouleaux de couchage (7) pourvus de moyens d'entraînement pour une vitesse de guidage sensiblement identique de deux rouleaux (19, 20),
b) par un mécanisme applicateur (4) doté d'un système d'application de colle (31, 51, 53) contrôlable et dosable ainsi que d'un mécanisme de guidage de film (33, 55) réglable par la force de traction de film
c) un poste d'alignement (46) équipé d'un dispositif de génération de séquence de feuille (45) contrôlable mécaniquement
d) et un poste de coupe par voie humide pourvu d'un mécanisme à couteau (10) contrôlable dans la vitesse périphérique,
des ordinateurs (C1, C2) étant attribués au dispositif, ordinateurs dans lesquels on peut entrer la vitesse de traitement (V1) et la longueur de feuille (L), le mécanisme d'application (4), le poste d'alignement (46) et le poste de coupe (9) étant contrôlables par un générateur incrémental (18) de la commande principale.
